# EUROPEAN PATENT SPECIFICATION

(11) **EP 3 783 996 B1**
(45) Date of publication and mention of the grant of the patent: **22.06.2022**
(21) Application number: 19810157.8
(22) Date of filing: 30.05.2019
(51) Int. Cl.: H04W 76/15, H04W 36/02, H04W 36/00

(54) **COMMUNICATION METHODS AND DEVICES FOR PROCESSING DATA PACKETS BASED ON A CORRECT SEQUENCE**
KOMMUNIKATIONSVERFAHREN UND -VORRICHTUNGEN ZUR VERARBEITUNG VON DATENPACKETED IN DER KORREKTEN REIHENFOLGE
PROCÉDÉS ET DISPOSITIFS DE COMMUNICATION DE TRAITEMENT DE PAQUETS DE DONNÉES DANS LA SÉQUENCE CORRECTE

(30) Priority: 01.06.2018 CN 201810558794
(43) Date of publication of application: 24.02.2021
(73) Proprietor: HUAWEI TECHNOLOGIES CO., LTD., Shenzhen, Guangdong 518129 (CN)
(72) Inventor: YU, Fang, Shenzhen, Guangdong 518129 (CN); LI, Yan, Shenzhen, Guangdong 518129 (CN)
(74) Representative: Maiwald Patent- und Rechtsanwaltsgesellschaft mbH
(86) International application number: PCT/CN2019/089328
(87) International publication number: WO 2019/228467

(56) References cited:
- WO-A1-2018/030982
- NOKIA ET AL: "Support of End Markers in 5GS: case of Dual Connectivity and of EPC IWK", 3GPP DRAFT; S2-183419 -23501- END MARKERS -VF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sanya, P.R. China; 20180416 - 20180420 10 April 2018 (2018-04-10), XP051437737, Retrieved from the Internet: URL:http://www.3gpp.org/ftp/tsg%5Fsa/WG2%5 FArch/TSGS2%5F127%5FSanya/Docs/ [retrieved on 2018-04-10]
- HUAWEI ET AL: "TS 23.502 End-Marker during HO Procedure", 3GPP DRAFT; S2-178059 WAS 7861 7140 TS 23.502 END-MARKER DURING HO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. SA WG2, no. Ljubljana, Slovenia; 20171023 - 20171027 30 October 2017 (2017-10-30), XP051360676, Retrieved from the Internet: URL:http://www.3gpp.org/ftp/tsg_sa/WG2_Arc h/TSGS2_123_Ljubljana/Docs/ [retrieved on 2017-10-30]
- "3rd Generation Partnership Project; Technical Specification Group Services and System Aspects; General Packet Radio Service (GPRS) enhancements for Evolved Universal Terrestrial Radio Access Network (E-UTRAN) access (Release 15)", 3GPP STANDARD; TECHNICAL SPECIFICATION; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.3.0, 27 March 2018 (2018-03-27), pages 1-405, XP051450523, [retrieved on 2018-03-27]
- "3rd Generation Partnership Project; Technical Specification Group Services and System Aspects; Architecture enhancements for control and user plane separation of EPC nodes; Stage 2 (Release 15)", 3GPP STANDARD; TECHNICAL SPECIFICATION; 3GPP TS 23.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.2.0, 27 March 2018 (2018-03-27), pages 1-92, XP051450516, [retrieved on 2018-03-27]
- "Draft Report of SA WG2 Meetings #127", 3GPP Draft; S2-184648, 22 May 2018 (2018-05-22), XP051535268,
- "Draft Report of SA WG2 Meetings #127", 3GPP Draft; S2-185917, 31 May 2018 (2018-05-31), XP051456191,

## Description

### CROSS-REFERENCE TO RELATED APPLICATIONS

This application claims priority to Chinese Patent Application No. 201810558794.1, filed with the Chinese Patent Office on June 1, 2018 and entitled "COMMUNICATION METHOD AND APPARATUS".

### TECHNICAL FIELD

This application relates to the field of mobile communications technologies, and in particular, to a communication method and an apparatus.

### BACKGROUND

When a terminal device establishes a multi-access (multi-access) session, a data flow of the session may be transmitted between the terminal device and a user plane network element by using a plurality of access technologies.

For example, when the terminal device is currently transmitting the data flow to the user plane network element by using a first access technology, if using the first access technology to transmit the data flow of the session is switched to using a second access technology to continue to transmit the data flow of the session, a data packet of the data flow transmitted by a sender by using the first access technology before the switching may arrive at a receiver later than a data packet of the data flow transmitted by using the second access technology after the switching, and the receiver processes the received data packets based on a receiving sequence. Consequently, an error may occur.

The document D1: NOKIA ET AL: "Support of End Markers in 5GS: case of Dual Connectivity and of EPC IWK",3GPP DRAFT; S2-183419 -23501- END MARKERS -VF, 3RD GENERATION PARTNERSHIP PROJECT (3GPP), 10 April 2018 (2018-04-10) discloses support of End Markers in 5GS.

### SUMMARY

This application provides a communication methods and apparatuses so that a receiver can process received data packets based on a correct sequence.

According to a first aspect, this application provides a communication method as defined by independent claim 1. The method includes: A user plane network element sends indication information to a first access device. The indication information is used to indicate the first access device to notify the user plane network element after the first access device sends a first downlink data packet of a data flow of a first session to a terminal device. After the user plane network element receives response information, the user plane network element sends a second downlink data packet of the data flow to the terminal device by using a second access device. The response information is used to indicate that the first downlink data packet is already sent to the terminal device. The first access device supports a first access technology, and the second access device supports a second access technology. Based on the solution, when needing to switch from using the first access device to send the data flow to the terminal device to using the second access device to send the data flow to the terminal device, the user plane network element first sends the indication information to the first access device, where the indication information is used to indicate the first access device to notify the user plane network element after the first access device sends the first downlink data packet of the data flow of the first session to the terminal device, so that after receiving the response information, the user plane network element determines that the first downlink data packet that is of the data flow and that is sent by using the first access device is sent to the terminal device; and then sends the second downlink data packet of the data flow to the terminal device by using the second access device, so that the terminal device first receives the data packet that is of the data flow and that is sent by the user plane network element by using the first access device, and then receives the data packet that is of the data flow and that is sent by the user plane network element by using the second access device. In this way, the terminal device can process the data packets based on a sequence of receiving the data packets, and an error or poor user experience caused by out-of-order delivery of the data packets is avoided.

In a possible implementation, the user plane network element may receive the response information by using any one of the following methods.

Method 1: The user plane network element receives the response information from a session management network element. In the method, the user plane network element receives the response information from the session management network element that is on a control plane.

Method 2: The user plane network element receives an uplink data packet from the first access device. The uplink data packet includes the response information. In the method, the user plane network element receives the response information from a user plane. Specifically, the user plane network element receives the uplink data packet, and the uplink data packet carries the response information.

In a possible implementation, that a user plane network element sends indication information to a first access device may include: The user plane network element sends a third downlink data packet to the first access device. The third downlink data packet includes the indication information. The first access device is a radio access network (radio access network, RAN) device, the third downlink data packet includes a general packet radio service technology (general packet radio service, GPRS) tunneling protocol-user plane (GPRS tunneling protocol for the user plane, GTP-U) header, and the GTP-U header includes the indication information; or the first access device is a non-3rd generation partnership project (3rd generation partnership project, 3GPP) interworking function (non-3GPP interworking function, N3IWF) device, the third downlink data packet includes a generic routing encapsulation (generic routing encapsulation, GRE) protocol header, and the GRE header includes the indication information. In the implementation, the user plane network element sends the third downlink data packet including the indication information to the first access device. The GTP or GRE protocol is supported between the user plane network element and the first access device, so that the user plane network element specifically sends the GTP-U header or the GRE protocol header including the indication information to the first access device.

According to a second aspect, this application provides a communication method as defined by independent claim 3. The method includes:
A first access device receives first indication information from a user plane network element. The first indication information is used to indicate the first access device to notify the user plane network element after the first access device sends a first downlink data packet of a data flow of a first session to a terminal device. The first access device supports a first access technology. After the first downlink data packet is already sent to the terminal device, the first access device sends response information to the user plane network element. The response information is used to indicate that the first downlink data packet is already sent to the terminal device. Based on the solution, when needing to switch from using the first access device to send the data flow to the terminal device to using a second access device to send the data flow to the terminal device, the user plane network element first sends the indication information to the first access device, where the indication information is used to indicate the first access device to notify the user plane network element after the first access device sends the first downlink data packet of the data flow to the terminal device. After determining that the first downlink data packet is already sent to the terminal device, the first access device sends the response information to the user plane network element. In this way, the user plane network element may learn that the data packet that is of the data flow and that is sent by using the first access device is already sent to the terminal device, and the user plane network element may further send a second downlink data packet of the data flow to the terminal device by using the second access device, so that the terminal device first receives the data packet that is of the data flow and that is sent by the user plane network element by using the first access device, and then receives the data packet that is of the data flow and that is sent by the user plane network element by using the second access device. In this way, the terminal device can process the data packets based on a sequence of receiving the data packets, and an error or poor user experience caused by out-of-order delivery of the data packets is avoided.

In a possible implementation, after sending the response information to the user plane network element, the first access device may further release radio resources between the first access device and the terminal device.

In a possible implementation, that a first access device receives first indication information from a user plane network element may include: The first access device receives a third downlink data packet from the user plane network element. The third downlink data packet includes the first indication information. In the method, the user plane network element sends the third downlink data packet including the first indication information to the first access device.

In a possible implementation, the first access device may further determine that the user plane network element sends the data flow of the first session to terminal device by using the second access device. The second access device supports a second access technology.

In a possible implementation, the first access device may send the response information to the user plane network element by using any one of the following methods.

Method 1: The first access device sends the response information to the user plane network element by using a session management network element. In other words, the first access device may send the response information to the user plane network element by using the session management network element that is on a control plane.

Method 2: The first access device sends a first uplink data packet to the user plane network element. The first uplink data packet includes the response information. In other words, the first access device may further send the first uplink data packet to the user plane network element by using a user plane. The first uplink data packet includes the response information.

In a possible implementation, the first indication information is carried in a third downlink data packet sent by the user plane network element to the first access device.

In a possible implementation, the first access device may further receive second indication information, and the second access device supports the second access technology. After receiving the second indication information, the first access device detects whether a data packet received from the user plane network element is the third downlink data packet. In other words, the second indication information is used to trigger the first access device to start to detect whether the data packet received from the user plane network element is the third downlink data packet, and the third downlink data packet carries the first indication information. The second indication information may include an identifier of the first session and an identifier of the data flow. Optionally, the second indication information may further include type information of the second access technology. Alternatively, the type information of the second access technology is sent to the first access device by using another piece of indication information.

The second indication information is used to indicate that the user plane network element sends the data flow of the first session to the terminal device by using the second access device, or the second indication information is used to indicate the first access device to detect whether the data packet received from the user plane network element is the third downlink data packet.

In a possible implementation, that the first access device receives the second indication information may include: The first access device receives the second indication information from the session management network element.

In a possible implementation, the first access device is a RAN device, the third downlink data packet includes a GTP-U header, and the GTP-U header includes the first indication information; or the first access device is an N3IWF device, the third downlink data packet includes a GRE header, and the GRE header includes the first indication information.

According to a third aspect, this application provides a communication method as defined by independent claim 10. The method includes: A first device receives, by using a second access device, a second data packet that is of a data flow of a first session and that is from a second device. The first device receives second indication information, and detects, based on the second indication information, whether a data packet received from a first access device includes first indication information. The second indication information is used to indicate that a transmission manner of the data flow is switched from using a first access technology to using a second access technology, and the first indication information is used to indicate that a first data packet of the data flow is already sent to the first device by using the first access device. After the first device receives, by using the first access device, the first indication information that is from the second device, the first device processes the second data packet. The first device processes the first data packet before processing the second data packet. The first access device supports the first access technology, and the second access device supports the second access technology. Based on the solution, the second device starts to use the first access device to send a data packet of a data flow of a session to the first device, and then needs to switch to using the second access device to continue to send the data packet of the data flow of the session to the first device. After access technology switching, the second device sends, to the first device, a data packet including the first indication information. The first indication information is used to indicate that the first data packet of the data flow is already sent to the first device by using the first access device. The first data packet is last one or more data packets sent by the second device to the first device by using the first access device. Therefore, when receiving the first data packet by using the first access device, the first device directly processes the first data packet, and when receiving the second data packet by using the second access device, the first device does not process the second data packet until receiving the data packet that is sent by the second device by using the first access device and that includes the first indication information, and then, the first device processes the second data packet received by using the second access device, so that the terminal device can correctly process the data packets based on a sequence of sending the data packets by the second device, and this helps avoid an error or poor user experience caused by out-of-order delivery of the data packets.

In a possible implementation, that the first device receives second indication information may include: The first device receives the second indication information from a session management network element. In other words, the first device may receive the second indication information from the session management network element that is on a control plane.

In a possible implementation, the first device is a terminal device, and the second device is a user plane network element; or the first device is a user plane network element, and the second device is a terminal device.

In a possible implementation, that a first access device receives second indication information may include: The first access device receives the second indication information sent by a session management network element.

In a possible implementation, that the first access device sends the first indication information to the user plane network element may include: The first access device sends a third uplink data packet to the user plane network element. The third uplink data packet includes the first indication information.

In a possible implementation, the first access device is a RAN device, the third uplink data packet includes a GTP-U header, and the GTP-U header includes the first indication information. Alternatively, the first access device is an N3IWF device, the third uplink data packet includes a GRE header, and the GRE header includes the first indication information.

In a possible implementation, in any one of the foregoing aspects or any implementation of any one of the foregoing aspects, the data flow may be a quality of service (quality of service, QoS) flow, and the identifier of the data flow may be a quality of service flow identifier (QoS flow identifier, QFI). Alternatively, the data flow is a service data flow (service data flow, SDF), and the identifier of the data flow is an SDF template (SDF template).

In a possible implementation, in any one of the foregoing aspects or any implementation of any one of the foregoing aspects, the first access device is a RAN device, the first access technology is a 3GPP access technology, the second access device is an N3IWF device, and the second access technology is a non-3GPP access technology. Alternatively, the first access device is an N3IWF device, the first access technology is a non-3GPP access technology, the second access device is a RAN device, and the second access technology is a 3GPP access technology.

According to a fourth aspect. this application provides an apparatus. The apparatus may be an access device, or a user plane network element. . The apparatus has a function of implementing embodiments of any one of the first aspect, the second aspect, or the third aspect. The function may be implemented by hardware, or may be implemented by hardware by executing corresponding software. The hardware or the software includes one or more modules corresponding to the foregoing function.

Such aspects or other aspects of this application are clearer and more comprehensible in descriptions of the following embodiments.

### BRIEF DESCRIPTION OF DRAWINGS

FIG. 1 is a schematic diagram of a possible network architecture according to this application;
FIG. 2 is a flowchart of a communication method according to this application;
FIG. 3 is a flowchart of another communication method according to this application;
FIG. 4 is a flowchart of another communication method according to this application;
FIG. 5 is a schematic diagram of an apparatus according to this application;
FIG. 6 is a schematic diagram of a terminal device according to this application;
FIG. 7 is a schematic diagram of another apparatus according to this application; and
FIG. 8 is a schematic diagram of an access device according to this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. In the description of this application, unless otherwise stated, "a plurality of" means two or more than two.

The network architecture and the service scenario described in the embodiments of this application are intended to describe the technical solutions in the embodiments of this application more clearly, but constitute no limitation on the technical solutions provided in the embodiments of this application. Persons of ordinary skill in the art may learn that the technical solutions provided in the embodiments of this application are also applicable to a similar technical problem as the network architecture evolves and a new service scenario emerges.

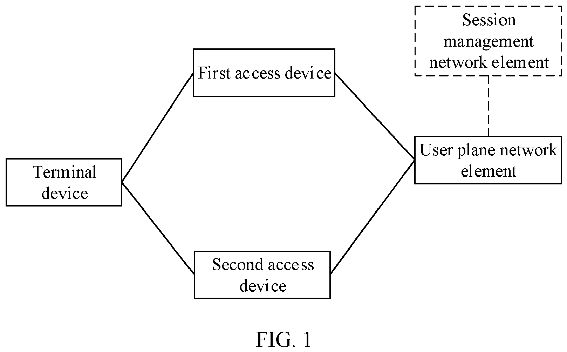

FIG. 1 is a schematic diagram of a possible network architecture according to this application. The network architecture includes a terminal device, a first access device, a second access device, and a user plane network element. Optionally, the network architecture may further include a session management network element.

The terminal device is a device that has a wireless transceiver function, and the terminal device may be deployed on the land, including an indoor or outdoor device, a hand-held device, or a vehicle-mounted device, or may be deployed on the water (for example, on a ship), or may be deployed in the air (for example, on a plane, a balloon, or a satellite). The terminal device may be a mobile phone (mobile phone), a tablet (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In an implementation, the first access device is a RAN device, the first access device supports a first access technology, and the first access technology is a 3GPP access technology. The second access device is an N3IWF device, the second access device supports a second access technology, and the second access technology is a non-3GPP access technology.

In another implementation, the first access device is an N3IWF device, the first access device supports a first access technology, and the first access technology is a non-3GPP access technology. The second access device is a RAN device, the second access device supports a second access technology, and the second access technology is a 3GPP access technology.

The RAN device in this application is a device that provides a wireless communication function for the terminal device. For example, the RAN device includes but is not limited to: a next generation NodeB (g NodeB, gNB) in 5G, an evolved NodeB (evolved Node B, eNB), a radio network controller (radio network controller, RNC), a NodeB (node B, NB), a base station controller (base station controller, BSC), a base transceiver station (base transceiver station, BTS), a home base station (for example, a home evolved nodeB, or a home node B, HNB), a baseband unit (baseBand unit, BBU), a transmission reception point (transmitting and receiving point, TRP), a transmission point (transmitting point, TP), a mobile switching center, and the like in 5G.

The N3IWF device in this application is a device that connects a non-3GPP access network and a 5G core network. For example, the N3IWF device may be an evolved packet data gateway (evolved Packet Data Gateway, ePDG) or a 5G data gateway.

In another implementation, both the first access device and the second access device are RAN devices, and the first access device and the second access device support different radio access technology (radio access technology, RAT) types.

In another implementation, both the first access device and the second access device are N3IWF devices, and the first access device and the second access device support different RAT types.

In another implementation, both the first access device and the second access device are RAN devices, and the first access device and the second access device support a same RAT type. In other words, the first access technology is the same as the second access technology.

In another implementation, both the first access device and the second access device are N3IWF devices, and the first access device and the second access device support a same RAT type. In other words, the first access technology is the same as the second access technology.

The RAT type may be any one of the following: a next generation radio access network (Next Generation RAN, NG-RAN), a terrestrial radio access network (UMTS Terrestrial Radio Access Network, UTRAN) of a universal mobile telecommunications system (Universal Mobile Telecommunications System, UMTS), a global area network (Global Area Network, GAN), or enhanced high speed packet access (High Speed Packet Access Evolution, HSPA Evolution), an untrusted WLAN (Untrusted WLAN), a trusted WLAN (Trusted WLAN), a wireless local area network (Wireless Local Area Networks, WLAN), a global system for mobile communications (Global System for Mobile Communication, GSM)/enhanced data rate for GSM evolution (Enhanced Data Rate for GSM Evolution, EDGE) radio access network (GSM EDGE Radio Access Network, GERAN), and an enhanced universal terrestrial radio access network (Evolved Universal Terrestrial Radio Access Network, EUTRAN).

In another implementation, the first access device and the second access device may alternatively be integrated into a same communications device, in other words, the communications device has at least two ports, where at least one port supports the first access technology, and at least one port supports the second access technology. If the implementation is used, both the first access device and the second access device in any embodiment of this application may be replaced with a communications device, and the communications device supports the first access technology and the second access technology.

For ease of description, in this application, an example in which the first access device and the second access device are two separate devices is used for description. Details are not described subsequently.

The user plane network element is mainly responsible for processing a user packet, for example, forwarding and charging for the user packet. In a 5th generation (5th generation, 5G) network, the user plane network element may be a user plane function (user plane function, UPF) network element. In future communications, for example, in a 6th generation (6th generation, 6G) network, the user plane network element may still be a UPF network element, or may have another name. This is not limited in this application.

The session management network element is mainly responsible for session management in a mobile network, such as session establishment, modification, and release. A specific function is, for example, allocating an internet protocol (internet protocol, IP) address to user equipment, or selecting a user plane network element that provides a packet forwarding function. In 5G, the session management network element may be a session management function (session management function, SMF) network element. In future communications such as 6G, the session management network element may still be an SMF network element, or may have another name. This is not limited in this application.

It may be understood that the foregoing functions may be network elements in a hardware device, software functions running on dedicated hardware, or virtualized functions instantiated on a platform (for example, a cloud platform).

For ease of description, an example in which the user plane network element is a UPF network element and the session management network element is an SMF network element is used for subsequent description in this application. Further, the UPF network element is briefly referred to as a UPF, and the SMF network element is briefly referred to as an SMF. In other words, in subsequent descriptions in this application, the UPF may be replaced with a user plane network element, and the SMF may be replaced with a session management network element.

In this application, a multi-access session, for example, a multi-access packet data unit (packet data unit, PDU) session, may be established between the terminal device and the user plane network element. In an upstream direction, the terminal device may use the first access technology to send a data flow of the session to the user plane network element by using the first access device, or may use the second access technology to send a data flow of the session to the user plane network element by using the second access device. Alternatively, the terminal device may use the first access technology to send a data flow of the session to the user plane network element by using the first access device, and use the second access technology to send the data flow of the session to the user plane network element by using the second access device. In a downstream direction, the user plane network element may use the first access technology to send a data flow of the session to the terminal device by using the first access device, or may use the second access technology to send a data flow of the session to the terminal device by using the second access device. Alternatively, the user plane network element may use the first access technology to send a data flow of the session to the terminal device by using the first access device, and use the second access technology to send the data flow of the session to the terminal device by using the second access device.

In an implementation, the data flow in this application may be a QoS flow, and an identifier of the data flow may be a QFI. In another implementation, the data flow in this application may alternatively be an SDF, and an identifier of the data flow may be an SDF template.

In this application, when the terminal device is used as a receiver of the data flow, and the user plane network element is used as a sender of the data flow, the terminal device may also be referred to as a first device, and the user plane network element may also be referred to as a second device. When the terminal device is used as a sender of the data flow, and the user plane network element is used as a receiver of the data flow, the terminal device may also be referred to as a second device, and the user plane network element may also be referred to as a first device.

It should be noted that, in this application, that the user plane network element sends a data flow to the terminal device specifically means that the user plane network element sends a data packet of the data flow to the terminal device. Similarly, that the terminal device sends a data flow to the user plane network element specifically means that the terminal device sends a data packet of the data flow to the user plane network element. This will not be described in the following.

This application is specific to an application scenario in which a data flow of a first session between the terminal device and the user plane network element is transmitted by using only one access technology, and the first session may be a common PDU session, a multi-access PDU session, or the like. The downstream direction is used as an example. The user plane network element currently uses the first access technology to send the data flow to the terminal device by using the first access device. If the user plane network element determines that it needs to use the second access technology to send the data flow to the terminal device by using the second access device, the user plane network element needs to stop sending the data flow to the terminal device by using the first access device. In other words, the user plane network element switches from using the first access technology to send the data flow to using the second access technology to send the data flow. The switching herein may be soft switching or hard switching.

For ease of description, this application is described by using an example in which transmission is performed by using the first access technology before the switching and transmission is performed by using the second access technology after the switching. In the upstream direction, before the switching, the terminal device uses the first access technology to send the data packet of the data flow to the user plane network element by using the first access device. After the switching, the terminal device uses the second access technology to continue to send a subsequent data packet of the data flow to the user plane network element by using the second access device. In the downstream direction, before the switching, the user plane network element uses the first access technology to send the data packet of the data flow to the terminal device by using the first access device. After the switching, the user plane network element uses the second access technology to continue to send a subsequent data packet of the data flow to the terminal device by using the second access device.

Referring to FIG. 1, the upstream direction is used as an example. Before the switching, the terminal device sends an uplink data packet to the user plane network element by using the first access device. After the switching, the terminal device sends the uplink data packet to the user plane network element by using the second access device. In a normal case, the uplink data packet sent by the terminal device by using the first access device before the switching should arrive at the user plane network element earlier than the uplink data packet sent by the terminal device by using the second access device after the switching, so that the user plane network element can first process, based on a sequence of receiving the uplink data packets, the uplink data packet received from the first access device, and then process the uplink data packet received from the second access device, thereby avoiding a problem of disorder of the data packets.

However, in actual application, because a transmission path between the user plane network element and the terminal device changes after the switching, the uplink data packet sent by the terminal device by using the first access device before the switching may arrive at the user plane network element later than the uplink data packet sent by the terminal device by using the second access device after the switching. If the user plane network element still processes the data packets based on the sequence of receiving the data packets, the user plane network element first processes the uplink data packet received by using the second access device, and then processes the uplink data packet received by using the first access device. Actually, in the data flow, in time sequence, the uplink data packet sent by using the first access device should be processed before the uplink data packet sent by using the second access device. Consequently, the problem of disorder of the data packets may be caused.

To resolve the foregoing problem, in a possible implementation, a sequence number is added to a header of each data packet in the data flow sent by the sender, that is, data packets in the data flow are numbered. If the receiver first receives a data packet with a larger sequence number, the receiver first buffers the data packet, and obtains the received data packet with the larger sequence number from the buffer after receiving and processing a data packet with a smaller sequence number. For example, before the switching, the sender sends a data packet 1, a data packet 2, and a data packet 3 to the receiver by using the first access device, where sequence numbers of the data packet 1, the data packet 2, and the data packet 3 are respectively 1, 2, and 3. After the switching, the sender sends a data packet 4 and a data packet 5 to the receiver by using the second access device, where sequence numbers of the data packet 4 and the data packet 5 are respectively 4 and 5. If a sequence of receiving the data packets by the receiver is: the data packet 1, the data packet 2, the data packet 4, the data packet 5, and the data packet 3, a manner of receiving and processing the data packets by the receiver is: receiving the data packet 1 and processing the data packet 1, receiving the data packet 2 and processing the data packet 2, receiving the data packet 4 and buffering the data packet 4, receiving the data packet 5 and buffering the data packet 5, receiving the data packet 3 and processing the data packet 3, processing the data packet 4, and processing the data packet 5. The processing a data packet herein may be, for example, removing a header of a protocol layer from the data packet and then forwarding the data packet from one protocol layer to another protocol layer, or parsing the data packet.

A problem existing in the foregoing implementation is that a sequence number needs to be added to the header of each data packet, and this increases overheads.

To resolve the foregoing problem, this application provides several communication methods. In the communication methods, a sequence number does not need to be added to the header of each data packet. Therefore, a receiver can process received data packets based on a correct sequence without significantly increasing overheads, and this helps avoid the problem of disorder that occurs when the data packets are processed.

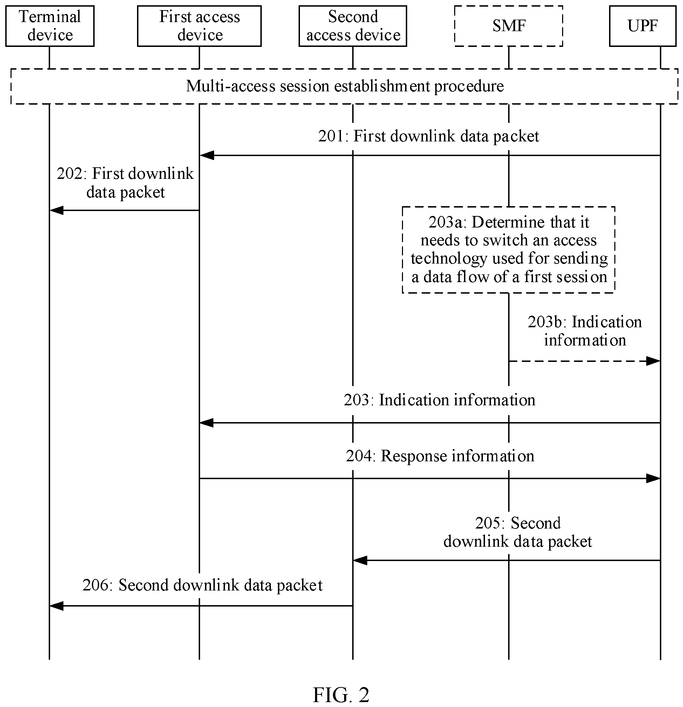

FIG. 2 is a communication method according to this application. A multi-access first session is established between a terminal device and a UPF by using a multi-access session establishment procedure. The communication method is used in a scenario in which in a downstream direction, before access technology switching, the UPF sends a data flow of the first session to the terminal device by using a first access device, and after the access technology switching, the UPF sends the data flow of the first session to the terminal device by using a second access device. The method includes the following steps.

Step 201: The UPF sends a first downlink data packet of the data flow of the first session to the first access device. Correspondingly, the first access device may receive the first downlink data packet.

Before the access technology switching, the UPF sends the first downlink data packet of the data flow of the first session to the terminal device by using the first access device. After receiving the first downlink data packet, the first access device sends the first downlink data packet to the terminal device.

Step 202: The first access device sends the first downlink data packet to the terminal device. Correspondingly, the terminal device may receive the first downlink data packet.

After receiving the first downlink data packet, the terminal device may start to process the first downlink data packet. For example, the terminal device deletes a protocol header of a current protocol layer from the first downlink data packet, and then sends the first downlink data packet to another protocol layer.

It should be noted that step 202 may be performed after step 201 and before step 203, or may be performed after step 203 and before step 204. This is not limited in this application.

Step 203: The UPF sends indication information to the first access device, where the indication information is used to indicate the first access device to notify the UPF after the first access device sends the first downlink data packet to the terminal device. Correspondingly, the first access device may receive the indication information.

In step 203, when determining that it needs to switch to using a second access technology to continue to send the data flow to the terminal device by using the second access device, the UPF sends the indication information to the first access device.

The UPF may determine, by using any one of the following methods, that it needs to switch to using the second access technology to continue to send the data flow to the terminal device by using the second access device.

Method 1 includes the following step 203a and step 203b.

Step 203a: An SMF determines that it needs to switch an access technology used for sending the data flow of the first session.

That is, the SMF determines whether it needs to switch the access technology used for sending the data flow of the first session.

In an implementation, the SMF may determine, based on a QoS monitoring result and/or a policy that is obtained from a policy control function (policy control function, PCF) network element, to switch the access technology used for sending the data flow.

Step 203b: The SMF sends indication information to the UPF. Correspondingly, the UPF receives the indication information.

The indication information may include an identifier of the first session and an identifier of the data flow. Optionally, the indication information may further include type information of the second access technology. Alternatively, the type information of the second access technology may further be sent to the UPF by using another piece of indication information. The indication information is used to indicate the UPF to send the data flow of the first session to the terminal device by using the second access device.

According to step 203a and step 203b, after receiving the indication information sent by the SMF, the UPF may determine that it needs to switch to using the second access technology to continue to send the data flow to the terminal device by using the second access device.

It should be noted that, if step 203a and step 203b are performed, step 203a may be performed before step 201, or may be performed after step 201 and before step 202, or may be performed after step 202 and before step 203b. This is not limited in this application.

Method 2: The terminal device indicates, by using an SMF that is on a control plane, the UPF to send the data flow of the first session to the terminal device by using the second access device.

In an implementation, the terminal device may determine, based on a QoS monitoring result and/or a policy that is delivered by a network side, to switch an access technology used for sending the data flow.

For example, the terminal device sends indication information to the SMF, and the indication information may include an identifier of the first session and an identifier of the data flow. Optionally, the indication information may further include type information of the second access technology. Alternatively, the type information of the second access technology may further be sent to the SMF by using another piece of indication information. The indication information is used to indicate the UPF to send the data flow of the first session to the terminal device by using the second access device. After receiving the indication information, the SMF sends the indication information to the UPF. Therefore, the UPF may determine that it needs to switch to using the second access technology to continue to send the data flow to the terminal device by using the second access device.

It should be noted that the foregoing merely provides two implementations in which the UPF determines that it needs to switch to using the second access technology to continue to send the data flow to the terminal device by using the second access device. However, methods are not limited to the foregoing implementations, and in actual application, another method may be further used, so that the UPF may determine that it needs to switch to using the second access technology to continue to send the data flow to the terminal device by using the second access device.

After determining that it needs to switch to using the second access technology to continue to send the data flow to the terminal device by using the second access device, the UPF sends the indication information to the first access device.

In an implementation, the indication information in step 203 may be an access technology switching instruction. After receiving the access technology switching instruction sent by the UPF, the first access device starts to acknowledge whether the first downlink data packet received from the UPF is already sent to the terminal device. For example, after sending the first downlink data packet to the terminal device, the first access device acknowledges that the first downlink data packet is already sent to the terminal device. For another example, after sending the first downlink data packet to the terminal device and receiving acknowledgment information sent by the terminal device, the first access device acknowledges that the first downlink data packet is already sent to the terminal device, where the acknowledgment information is used to indicate that the terminal device already receives the first downlink data packet.

In another implementation, the indication information in step 203 may be alternatively carried in a third downlink data packet and then the third downlink data packet is sent to the first access device. The third downlink data packet may be a data packet that has a same format as the first downlink data packet. For example, if the first access device is a RAN device, and GTP is supported between the first access device and the UPF, the third downlink data packet may be a GTP data packet. The third downlink data packet includes a GTP-U header, and the GTP-U header includes the indication information in step 203. For another example, if the first access device is an N3IWF device, and the GRE protocol is supported between the first access device and the UPF, the third downlink data packet may be a GRE data packet. The third downlink data packet includes a GRE header, and the GRE header includes the indication information in step 203. Specifically, the indication information may be a specific flag bit set in the GTP-U header or the GRE header. For example, the specific flag bit is set to "0" or "1". In this case, indication information in the specific flag bit may also be referred to as an end marker (end marker). The end marker is used to indicate that the first downlink data packet sent by the UPF by using the first access device is last one or more downlink data packets. Alternatively, it may be understood that the end marker is used to indicate that the UPF is to stop sending, by using the first access device, a data packet of the data flow of the first session. In addition to the specific flag bit, the GTP-U header or the GRU header of the third downlink data packet including the first indication information is completely the same as that of a first data packet.

If the indication information in step 203 is carried in the third downlink data packet and then the third downlink data packet is sent to the first access device, when receiving the downlink data packet that is of the data flow of the first session and that is sent by the UPF, the first access device may not check a specific flag bit in a header of the data packet. Therefore, when receiving the third downlink data packet, the first access device may consider the third downlink data packet as a common downlink data packet, and does not check a specific flag bit of the third downlink data packet. To trigger the first access device to detect the specific flag bit in the received downlink data packet, the first access device needs to determine that the UPF sends the data flow of the first session to the terminal device by using the second access device. In other words, when determining that the UPF sends the data flow of the first session to the terminal device by using the second access device, the first access device starts to detect the downlink data packet sent by the UPF, to determine whether the data packet received from the UPF is the third downlink data packet. For example, when determining that the UPF sends the data flow of the first session to the terminal device by using the second access device, the first access device starts to detect the specific flag bit of the data packet received from the UPF. If it is detected that the specific flag bit includes the indication information, it is determined that the data packet is the third downlink data packet. In this way, the indication information may be obtained from the third downlink data packet. If it is detected that the specific flag bit does not include the indication information, for example, the specific flag bit is null, it is determined that the data packet is not the third downlink data packet. Therefore, the data packet is processed as a common data packet of the data flow.

In an implementation, a manner in which the first access device determines that the UPF sends the data flow of the first session to the terminal device by using the second access device may be as follows: The first access device receives second indication information (the indication information in step 203 may also be referred to as first indication information). The second indication information may include an identifier of the first session and an identifier of the data flow. Optionally, the second indication information may further include type information of the second access technology, or the type information of the second access technology may further be sent to the first access device by using another piece of indication information. The second indication information is used to indicate that the UPF sends the data flow of the first session to the terminal device by using the second access device, or the second indication information is used to indicate the first access device to detect whether the data packet received from the UPF is the third downlink data packet. For example, the second indication information may be sent by the SMF to the first access device. For example, if step 203a is performed, after step 203a, the SMF may further send the second indication information to the first access device. For another example, the second indication information may alternatively be sent by the terminal device to the first access device by using the SMF. To be specific, before step 203, the terminal device sends the second indication information to the SMF, and then the SMF sends the second indication information to the first access device. Therefore, after obtaining the second indication information, the first access device starts to detect whether the data packet received from the UPF is the third downlink data packet.

Step 204: The first access device sends response information to the UPF, where the response information is used to indicate that the first downlink data packet is already sent to the terminal device. Correspondingly, the UPF may receive the response information.

After receiving the response information, the UPF may determine that all downlink data packets sent by using the first access device before the switching are already sent to the terminal device.

In an implementation, the first access device may send the response information by using the control plane. For example, the first access device sends the response information to the SMF, and then the SMF sends the response information to the UPF.

In another implementation, the first access device may further send the response information by using a user plane. For example, the first access device sends a first uplink data packet to the UPF. The first uplink data packet includes the response information. In another implementation, the first uplink data packet may be a GTP or GRE data packet. For example, if the first access device is a RAN device, and GTP is supported between the first access device and the UPF, the first uplink data packet may be a GTP data packet. The first uplink data packet includes the GTP-U header, and the GTP-U header includes the response information. For another example, if the first access device is an N3IWF device, and the GRE protocol is supported between the first access device and the UPF, the first uplink data packet may be the GRE data packet. The first uplink data packet includes a GRE header, and the GRE header includes the response information. Specifically, the response information may be a specific flag bit set in the GTP-U header or the GRE header. For example, the specific flag bit is set to "0" or "1".

Optionally, after sending the response information to the UPF, the first access device may further release radio resources between the first access device and the terminal device.

Step 205: The UPF sends a second downlink data packet to the second access device. Correspondingly, the second access device may receive the second downlink data packet.

After determining that all downlink data packets sent by using the first access device before the switching are already sent to the terminal device, the UPF may use the switched-to second access technology to continue to send the second downlink data packet of the data flow of the first session to the terminal device by using the second access device. Specifically, the UPF sends the second downlink data packet to the second access device.

Step 206: The second access device sends the second downlink data packet to the terminal device. Correspondingly, the terminal device may receive the second downlink data packet.

After receiving the second downlink data packet sent by the UPF, the second access device sends the second downlink data packet to the terminal device.

After receiving the second downlink data packet, the terminal device may start to process the second downlink data packet. For example, the terminal device deletes a protocol header of a current protocol layer from the second downlink data packet, and then sends the second downlink data packet to another protocol layer.

According to step 201 to step 206, when needing to switch from using the first access device to send the data flow to the terminal device to using the second access device to send the data flow to the terminal device, the UPF first sends the indication information to the first access device, where the indication information is used to indicate the first access device to notify the UPF after the first access device sends the first downlink data packet of the data flow of the first session to the terminal device. In this way, after receiving the response information, the UPF determines that the first downlink data packet that is of the data flow and that is sent by using the first access device is sent to the terminal device, and then sends the second downlink data packet to the terminal device by using the second access device, so that the terminal device first receives the data packet that is of the data flow and that is sent by the UPF by using the first access device, and then receives the data packet that is of the data flow and that is sent by the UPF by using the second access device. In this way, the terminal device can process the data packets based on a sequence of receiving the data packets, and an error or poor user experience caused by out-of-order delivery of the data packets is avoided.

Therefore, this application discloses a communication method, including the following steps.

A user plane network element sends indication information to a first access device. The indication information is used to indicate the first access device to notify the user plane network element after the first access device sends a first downlink data packet of a data flow of a first session to a terminal device. (Refer to the description in step 203).

After the user plane network element receives response information, the user plane network element sends a second downlink data packet of the data flow to the terminal device by using a second access device. The response information is used to indicate that the first downlink data packet is already sent to the terminal device. The first access device supports a first access technology, and the second access device supports a second access technology.

### (Refer to the description in step 205).

In a possible implementation, that the user plane network element may receive the response information includes: The user plane network element receives the response information from a session management network element. Alternatively, the user plane network element receives an uplink data packet from the first access device. The uplink data packet includes the response information.

In a possible implementation, that a user plane network element sends indication information to a first access device includes: The user plane network element sends a third downlink data packet to the first access device. The third downlink data packet includes the indication information. The first access device is a RAN device, the third downlink data packet includes a GTP-U header, and the GTP-U header includes the indication information; or the first access device is an N3IWF device, the third downlink data packet includes a GRE protocol header, and the GRE header includes the indication information.

In the communication method, when needing to switch from using the first access device to send the data flow to the terminal device to using the second access device to send the data flow to the terminal device, the user plane network element first sends the indication information to the first access device, where the indication information is used to indicate the first access device to notify the user plane network element after the first access device sends the first downlink data packet of the data flow of the first session to the terminal device. In this way, after receiving the response information, the user plane network element determines that the first downlink data packet that is of the data flow and that is sent by using the first access device is sent to the terminal device, and then sends the second downlink data packet to the terminal device by using the second access device, so that the terminal device first receives the data packet that is of the data flow and that is sent by the user plane network element by using the first access device, and then receives the data packet that is of the data flow and that is sent by the user plane network element by using the second access device. In this way, the terminal device can process the data packets based on a sequence of receiving the data packets, and an error or poor user experience caused by out-of-order delivery of the data packets is avoided.

This application further discloses a communication method, including the following steps.

A first access device receives first indication information from a user plane network element. The first indication information is used to indicate the first access device to notify the user plane network element after the first access device sends a first downlink data packet of a data flow of a first session to a terminal device. The first access device supports a first access technology. (Refer to the description in step 203).

After the first downlink data packet is already sent to the terminal device, the first access device sends response information to the user plane network element. The response information is used to indicate that the first downlink data packet is already sent to the terminal device. (Refer to the description in step 204).

In a possible implementation, that a first access device receives first indication information from a user plane network element includes: The first access device receives a third downlink data packet from the user plane network element. The third downlink data packet includes the first indication information.

In a possible implementation, the first access device further determines that the user plane network element sends the data flow of the first session to terminal device by using the second access device.

In a possible implementation, that the first access device sends response information to the user plane network element includes: The first access device sends the response information to the user plane network element by using a session management network element. Alternatively, the first access device sends a first uplink data packet to the user plane network element. The first uplink data packet includes the response information.

In a possible implementation, the first indication information is carried in a third downlink data packet sent by the user plane network element to the first access device.

In a possible implementation, the first access device may further receive second indication information, and the second access device supports a second access technology. After receiving the second indication information, the first access device detects whether a data packet received from the user plane network element is the third downlink data packet.

In a possible implementation, the second indication information may include an identifier of the first session and an identifier of the data flow. Optionally, the second indication information may further include type information of the second access technology.

In a possible implementation, that the first access device receives the second indication information includes: The first access device receives the second indication information from the session management network element.

In a possible implementation, the first access device is a RAN device, the third downlink data packet includes a GTP-U header, and the GTP-U header includes the first indication information; or the first access device is an N3IWF device, the third downlink data packet includes a GRE header, and the GRE header includes the first indication information.

In the communication method, when needing to switch from using the first access device to send the data flow to the terminal device to using the second access device to send the data flow to the terminal device, the user plane network element first sends the indication information to the first access device, where the indication information is used to indicate the first access device to notify the user plane network element after the first access device sends the first downlink data packet of the data flow to the terminal device. After determining that the first downlink data packet is already sent to the terminal device, the first access device sends the response information to the user plane network element. In this way, the user plane network element may learn that the data packet that is of the data flow and that is sent by using the first access device is already sent to the terminal device, and the user plane network element may further send the second downlink data packet to the terminal device by using the second access device, so that the terminal device first receives the data packet that is of the data flow and that is sent by the user plane network element by using the first access device, and then receives the data packet that is of the data flow and that is sent by the user plane network element by using the second access device. In this way, the terminal device can process the data packets based on a sequence of receiving the data packets, and an error or poor user experience caused by out-of-order delivery of the data packets is avoided.

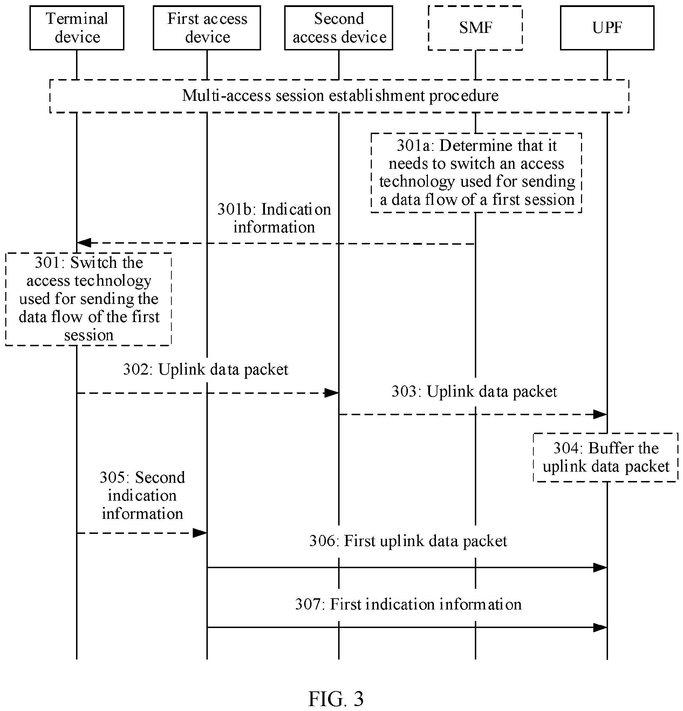

FIG. 3 is another communication method according to this application. A multi-access first session is established between a terminal device and a UPF by using a multi-access session establishment procedure. The communication method is used in a scenario in which in an upstream direction, before switching, the terminal device sends a data flow of the first session to the UPF by using a first access device, and after switching, the terminal device sends the data flow of the first session to the UPF by using a second access device. The method includes the following steps.

Step 301: The terminal device switches an access technology used for sending the data flow of the first session.

Before the switching, the terminal device sends the data flow of the first session to the UPF by using the first access device, and after the switching, the terminal device sends the data flow of the first session to the UPF by using the second access device.

In an implementation, the terminal device may actively initiate switching the access technology used for sending the data flow of the first session. In other words, the terminal device determines that it needs to switch the access technology used for sending the data flow of the first session, and then starts to switch the access technology used for sending the data flow of the first session.

In an implementation, the terminal device may determine, based on a QoS monitoring result and/or a policy that is delivered by a network side, to switch the access technology used for sending the data flow.

In another implementation, alternatively, after receiving indication information, the terminal device may switch the access technology used for sending the data flow of the first session. For example, when the indication information is sent by an SMF, before step 301, the following step 301a and step 301b may be further included.

Step 301a: The SMF determines that it needs to switch the access technology used for sending the data flow of the first session, and then starts to switch the access technology used for sending the data flow of the first session.

That is, the SMF determines whether it needs to switch the access technology used for sending the data flow of the first session.

In an implementation, the SMF may determine, based on the QoS monitoring result and/or a policy that is obtained from a PCF network element, to switch the access technology used for sending the data flow.

Step 301b: The SMF sends the indication information to the terminal device. Correspondingly, the terminal device may receive the indication information.

The indication information may include an identifier of the first session and an identifier of the data flow. Optionally, the indication information may further include type information of a second access technology. Alternatively, the type information of the second access technology may further be sent to the terminal device by using another piece of indication information. The indication information is used to indicate the terminal device to send the data flow of the first session to the UPF by using the second access device.

According to step 301a and step 301b, after receiving the indication information sent by the SMF, the terminal device may determine that it needs to switch to using the second access technology to continue to send the data flow to the UPF by using the second access device.

Step 302: The terminal device sends an uplink data packet to the second access device. Correspondingly, the second access device may receive the uplink data packet.

Step 303: The second access device sends the uplink data packet to the UPF. Correspondingly, the UPF may receive the uplink data packet.

According to step 302 and step 303, the terminal device uses the switched second access technology to continue to send the data packet of the data flow of the first session to the UPF by using the second access device.

Step 304: The UPF buffers the uplink data packet received from the second access device.

Optionally, before step 304, the UPF may further receive one piece of indication information. After receiving the indication information, the UPF buffers the uplink data packet received from the second access device.

For example, if in step 301, the terminal device actively initiates switching the access technology used for sending the data flow of the first session, the terminal device may send one piece of indication information to the UPF. Optionally, the indication information may include the identifier of the first session and the identifier of the data flow. Optionally, the indication information may further include the type information of the second access technology, or the type information of the second access technology may further be sent to the UPF by using another piece of indication information. The indication information is used to indicate the terminal device to send the data flow of the first session to the UPF by using the second access device.

For another example, if in step 301, the SMF initiates switching the access technology used for sending the data flow of the first session, the SMF may send one piece of indication information to the UPF. Optionally, the indication information may include the identifier of the first session and the identifier of the data flow. Optionally, the indication information may further include the type information of the second access technology, or the type information of the second access technology may further be sent to the UPF by using another piece of indication information. The indication information is used to indicate the terminal device to send the data flow of the first session to the UPF by using the second access device.

Step 305: The terminal device sends second indication information to the first access device. Correspondingly, the first access device may receive the second indication information.

The second indication information includes the identifier of the first session and the identifier of the data flow. Further, the second indication information may further include the type information of the second access technology. The second indication information is used to indicate the first access device to generate first indication information, and the first indication information is used to indicate that a first uplink data packet of the data flow of the first session is already sent by the terminal device to the UPF by using the first access device.

In an implementation, the terminal device may send the second indication information to the first access device by using a control plane. For example, the terminal device sends the second indication information to the SMF, and the SMF sends the second indication information to the first access device.

In another implementation, if step 301a and step 301b are further included before step 301, after step 301, the terminal device may further send an answer message to the SMF, the answer message is used to notify the SMF that the terminal device already switches to using the second access technology to send the data packet of the data flow of the first session. In the implementation, step 305 may be replaced with the following: The SMF sends second indication information to the first access device. Correspondingly, the first access device receives the second indication information. To be specific, the SMF generates the second indication information, and sends the second indication information to the first access device. The second indication information includes the identifier of the first session and the identifier of the data flow. Further, the second indication information may further include the type information of the second access technology. The second indication information is used to indicate the first access device to generate the first indication information.

Step 306: The first access device sends the first uplink data packet to the UPF. Correspondingly, the UPF may receive the first uplink data packet.

The first uplink data packet may be sent by the terminal device to the first access device before step 301.

Step 307: The first access device sends the first indication information to the UPF. Correspondingly, the UPF may receive the first indication information.

In an implementation, the first indication information in step 307 may be an access technology switching instruction. After receiving the switching instruction sent by the first access device, the UPF acknowledges that the data flow that is of the first session and that is sent by the terminal device by using the first access device is already sent to the UPF.

In another implementation, the first indication information in step 307 may be alternatively carried in a third uplink data packet and then the third downlink data packet is sent to the UPF. The third uplink data packet may be a data packet that has a same format as the first uplink data packet. For example, if the first access device is a RAN device, and GTP is supported between the first access device and the UPF, the third downlink data packet may be a GTP data packet. The third downlink data packet includes a GTP-U header, and the GTP-U header includes the first indication information in step 307. For another example, if the first access device is an N3IWF device, and the GRE protocol is supported between the first access device and the UPF, the third downlink data packet may be a GRE data packet. The third downlink data packet includes a GRE header, and the GRE header includes the first indication information in step 307. Specifically, the first indication information may be a specific flag bit set in the GTP-U header or the GRE header. For example, the specific flag bit is set to "0" or "1". In this case, indication information in the specific flag bit may also be referred to as an end marker (end marker). The end marker is used to indicate that the first uplink data packet sent by the terminal device by using the first access device is last one or more uplink data packets. Alternatively, it may be understood that the end marker is used to indicate that the terminal device is to stop sending, by using the first access device, a data packet of the data flow of the first session.

If the first indication information in step 307 is carried in the third uplink data packet and then the third downlink data packet is sent to the UPF, when receiving the uplink data packet that is of the data flow of the first session and that is sent by the first access device, the UPF may not check a specific flag bit in a header of the data packet. Therefore, when receiving the third uplink data packet, the UPF may consider the third uplink data packet as a common uplink data packet of the data flow, and do not check a specific flag bit of the third uplink data packet. To trigger the UPF to detect the specific flag bit in the received uplink data packet, the UPF needs to determine that the terminal device sends the data flow of the first session to the UPF by using the second access device. In other words, when determining that the terminal device sends the data flow of the first session to the UPF by using the second access device, the UPF starts to detect the uplink data packet sent by the terminal device by using the first access device, to determine whether the data packet received from the first access device is the third uplink data packet. For example, when determining that the terminal device sends the data flow of the first session to the UPF by using the second access device, the UPF starts to detect the specific flag bit of the data packet received from the first access device. If it is detected that the specific flag bit includes the first indication information, it is determined that the data packet is the third uplink data packet. In this way, the first indication information may be obtained from the third uplink data packet. If it is detected that the specific flag bit does not include the first indication information, for example, the specific flag bit is null, it is determined that the data packet is not the third uplink data packet. Therefore, the data packet is processed as a common data packet.

In an implementation, a manner in which the UPF determines that the terminal device sends the data flow of the first session to the UPF by using the second access device may be as follows: The UPF may receive one piece of indication information, and the indication information may include the identifier of the first session and the identifier of the data flow. Optionally, the indication information may further include the type information of the second access technology, or the type information of the second access technology may further be sent to the UPF by using another piece of indication information. The indication information is used to indicate the terminal device to send the data flow of the first session to the UPF by using the second access device. For example, the indication information may be sent by the SMF to the UPF. For example, if step 301a is performed, after step 301a, the SMF may further send the indication information to the UPF. For another example, the indication information may alternatively be sent by the terminal device to the UPF by using the SMF. To be specific, after step 301, the terminal device sends the indication information to the SMF, and then the SMF sends the indication information to the UPF. Therefore, after obtaining the indication information, the UPF starts to detect whether the data packet received from the first access device is the third uplink data packet.

According to step 305 to step 307, the terminal device indicates, by using the second indication information, the first access device to generate the first indication information. Then, the first access device first sends, to the UPF, the first uplink data packet received from the terminal device before switching, and then sends the first indication information to the UPF, where the first indication information is used to indicate that the first uplink data packet of the data flow of the first session is already sent by the terminal device to the UPF by using the first access device. Therefore, the UPF may determine, based on the first indication information, that all uplink data packets of the terminal device are already received by using the first access device before the switching.

Further, after step 307, the UPF may first process the first uplink data packet received in step 306, for example, add a packet header to the first uplink data packet, and then send the first uplink data packet to another protocol layer from a current protocol layer. Then, the UPF processes the uplink data packet buffered in step 304, for example, sends the uplink data packet to a next-hop network node.

According to step 301 to step 307, when the terminal device needs to switch from using the first access device to send the data flow to the UPF to using the second access device to send the data flow to the UPF, the first access device may receive the second indication information. The second indication information is used to indicate the UPF to generate the first indication information, and the first indication information is used to indicate that the first uplink data packet of the data flow of the first session is already sent by the terminal device to the UPF by using the first access device. Then, the first access device first sends, to the UPF, the first uplink data packet that is from the terminal device, and then sends the first indication information. Further, the UPF first receives the first uplink data packet, and then receives the first indication information. After receiving the first indication information, the UPF may determine that the uplink data packet is already sent by the terminal device by using the first access device. In this way, the UPF can first process, in sequence, the data packet that is of the data flow and that is received from the first access device, and then process the data packet that is of the data flow and that is received from the second access device.

Therefore, this application discloses a communication method, including the following steps.

A first access device receives second indication information. The second indication information is used to indicate the first access device to generate first indication information, and the first indication information is used to indicate that a first uplink data packet of a data flow of a first session is already sent by a terminal device to a user plane network element by using the first access device. The first access device supports a first access technology.

### (Refer to the description in step 305).

The first access device first sends a first uplink data packet to the user plane network element, and then sends the first indication information to the user plane network element. The second indication information may include an identifier of the first session and an identifier of the data flow. (Refer to the description in step 306).

In a possible implementation, that a first access device receives second indication information includes: The first access device receives the second indication information sent by a session management network element.

In a possible implementation, that the first access device sends the first indication information to the user plane network element includes: The first access device sends a third uplink data packet to the user plane network element. The third uplink data packet includes the first indication information.

In a possible implementation, the first access device is a RAN device, the third uplink data packet includes a GTP-U header, and the GTP-U header includes the first indication information. Alternatively, the first access device is an N3IWF device, the third uplink data packet includes a GRE header, and the GRE header includes the first indication information.

According to the communication method, when the terminal device needs to switch from using the first access device to send the data flow to the user plane network element to using the second access device to send the data flow to the user plane network element, the first access device may receive the second indication information. The second indication information is used to indicate the user plane network element to generate the first indication information, and the first indication information is used to indicate that the first uplink data packet of the data flow of the first session is already sent by the terminal device to the user plane network element by using the first access device. Then, the first access device first sends, to the user plane network element, the first uplink data packet that is from the terminal device, and then sends the first indication information. Further, the user plane network element first receives the first uplink data packet, and then receives the first indication information. After receiving the first indication information, the user plane network element may determine that the uplink data packet is already sent by the terminal device by using the first access device. In this way, the user plane network element can first process, in sequence, the data packet that is of the data flow and that is received from the first access device, and then process the data packet that is of the data flow and that is received from the second access device.

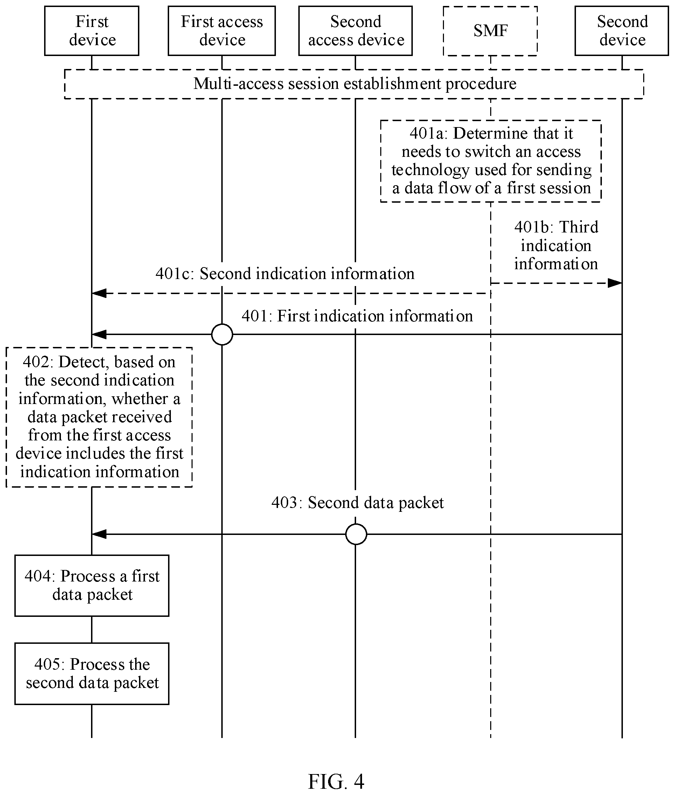

FIG. 4 is a communication method according to this application. A multi-access first session is established between a terminal device and a UPF by using a multi-access session establishment procedure. The communication method may be used in an upstream direction or a downstream direction. When the terminal device is used as a receiver of a data flow, and the user plane network element is used as a sender of the data flow, the terminal device may also be referred to as a first device, and the user plane network element may also be referred to as a second device. When the terminal device is used as a sender of the data flow, and the user plane network element is used as a receiver of the data flow, the terminal device may also be referred to as a second device, and the user plane network element may also be referred to as a first device. That is, the second device refers to the sender of the data flow, and the first device refers to the receiver of the data flow. Before switching, the second device sends the data flow of the first session to the first device by using a first access device, and after the switching, the second device sends the data flow of the first session to the first device by using a second access device. The method includes the following steps.

Step 401: The second device sends first indication information to the first device by using the first access device. Correspondingly, the first device may receive the first indication information by using the first access device.

Before access technology switching, the second device sends the data flow of the first session to the first device by using the first access device, and after the access technology switching, the second device sends the data flow of the first session to the first device by using the second access device.

For example, the second device determines, based on a QoS monitoring result and a pre-configured policy, to switch to sending the data flow from using a first access technology to using a second access technology, so as to send the first indication information to the first device by using the first access device. Alternatively, the second device receives third indication information, and sends, based on the third indication information, the first indication information to the first device by using the first access device.

In an implementation, the first device may initiate switching the access technology used for sending the data flow of the first session, that is, the first device determines that it needs to switch the access technology used for sending the data flow of the first session. After determining that it needs to switch the access technology used for sending the data flow of the first session, the first device may send the third indication information to the second device by using an SMF. The third indication information may include an identifier of the first session and an identifier of the data flow. Optionally, the third indication information may further include type information of the second access technology. Alternatively, the type information of the second access technology may further be sent to the second device by using another piece of indication information. The third indication information is used to indicate that the second device needs to switch the access technology of the first session. Alternatively, it may be understood that the third indication information is used to indicate the second device to send the data flow of the first session to the first device by using the second access device. After receiving the third indication information, the second device sends, based on the third indication information, the first indication information to the first device by using the first access device after a first data packet is already sent to the first device. The first indication information is used to indicate that the first data packet is already sent to the first device by using the first access device.

In another implementation, the SMF may further determine that it needs to switch the access technology used for sending the data flow of the first session. For example, when the SMF determines that it needs to switch the access technology used for sending the data flow of the first session, before step 401, the following step 401a and step 401b may be further included.

Step 401a: The SMF determines that it needs to switch the access technology used for sending the data flow of the first session, and then starts to switch the access technology used for sending the data flow of the first session.

That is, the SMF determines whether it needs to switch the access technology used for sending the data flow of the first session.

Step 401b: The SMF sends the third indication information to the second device. Correspondingly, the second device may receive the third indication information.

According to step 401a and step 401b, after receiving the third indication information sent by the SMF, the second device may determine that it needs to switch to using the second access technology to continue to send the data flow of the first session to the first device by using the second access device, and send, based on the third indication information, the first indication information to the first device by using the first access device.

Step 402: The first device detects, based on second indication information, whether a data packet received from the first access device includes the first indication information.

In an implementation, the second device may initiate switching the access technology used for sending the data flow of the first session, that is, the second device determines that it needs to switch the access technology used for sending the data flow of the first session. After determining that it needs to switch the access technology used for sending the data flow of the first session, the second device may send the second indication information to the first device by using the SMF. The second indication information may include the identifier of the first session and the identifier of the data flow. Optionally, the second indication information may further include the type information of the second access technology. Alternatively, the type information of the second access technology is sent to the first device by using another piece of indication information. The second indication information is used to indicate that the first device needs to switch the access technology used for sending the data flow of the first session. Alternatively, it may be understood that the second indication information is used to indicate the first device to receive, by using the second access device, the data flow that is of the first session and that is from the first device. Alternatively, it may be understood that the second indication information is used to indicate that a transmission manner of the data flow of the first session is switched from using the first access technology to using the second access technology. After receiving the second indication information, the first device detects whether the data packet received from the first access device includes the first indication information, and the first indication information is used to indicate that the first data packet is already sent to the first device by using the first access device. In addition, after receiving the second indication information, the first device may buffer, before detecting the data packet that includes the first indication information, a data packet that is from the second device and that is received by using the second access device.

In another implementation, the SMF may further determine that it needs to switch the access technology used for sending the data flow of the first session. For example, when the SMF determines that it needs to switch the access technology used for sending the data flow of the first session, on the basis of including step 401a and step 40b, the following step 401c may be further included.

Step 401c: The SMF sends the second indication information to the first device. Correspondingly, the first device may receive the second indication information.

According to step 401c, after receiving the second indication information sent by the SMF, the first device may determine that it needs to switch to using the second access technology to continue to receive the data flow of the first session from the first device by using the second access device, and detect, based on the second indication information, whether the data packet received from the first access device includes the first indication information.

To be specific, the first indication information in step 401 in this embodiment is carried in the data packet and then the data packet is sent to the first device. The data packet may be a data packet that has a same format as the first data packet. For example, if the traffic flow control protocol (traffic flow control protocol, TFCP) is supported between the first device and the second device, the data packet may be a TFCP data packet. The data packet includes a TFCP header, and the TFCP header includes the first indication information. Specifically, the first indication information may be a specific flag bit set in the TFCP header. For example, the specific flag bit is set to "0" or "1". In this case, the first indication information in the specific flag bit may also be referred to as an end marker (end marker). The end marker is used to indicate that the first data packet sent by the second device by using the first access device is last one or more data packets. Alternatively, it may be understood that the end marker is used to indicate that the second device is to stop sending, by using the first access device, the data packet of the data flow of the first session. In addition to the specific flag bit, the TFCP header of the data packet including the first indication information is completely the same as the TFCP header of the first data packet.

The first indication information is carried in the data packet and then the data packet is sent to the first device, when receiving the data packet that is of the data flow of the first session and that is sent by the second device, the first device may not check a specific flag bit in a header of the data packet. Therefore, when receiving the data packet including the first indication information, the first device may consider the data packet as a common data packet, and do not check a specific flag bit of the data packet. To trigger the first device to detect the specific flag bit in the received data packet, the first device needs to determine that the second device sends the data flow of the first session to the first device by using the second access device (for example, determine by using the second indication information). In other words, when determining that the second device sends the data flow of the first session to the first device by using the second access device, the first device starts to detect the data packet sent by the second device, to determine whether the data packet received from the second device includes the first indication information. For example, when determining that the second device sends the data flow of the first session to the first device by using the second access device, the first device starts to detect the specific flag bit of the data packet received from the second device. If it is detected that the specific flag bit includes the first indication information, it is determined that the first data packet of the data flow is already sent by the second device to the first device by using the first access device. If it is detected that the specific flag bit does not include the first indication information, for example, the specific flag bit is null, it is determined that the data packet does not carry the first indication information. Therefore, the data packet is processed as a common data packet.

Step 403: The second device sends a second data packet of the data flow of the first session to the first device by using the second access device. Correspondingly, the first device receives the second data packet by using the second access device.

The second data packet is sent to the first device by using the second access device after the second device switches from using the first access device to send the data packet of the data flow of the first session to using the second access device to send the data packet of the data flow of the first session.

It should be noted that, before step 401c, and before the second device switches the access technology, the data packet sent to the first device by using the first access device is referred to as the first data packet. Therefore, in a time sequence of the data flow of the first session, the first data packet arrives earlier than the second data packet.

It should be noted that, from a perspective of the second device, the second device first sends the first data packet, and then sends the first indication information and the second data packet. A sequence of sending the first indication information and sending the second data packet by the second device is not limited, to be specific, the first indication information may be sent first, or the second data packet may be sent first, or the first indication information and the second data packet may be sent at the same time. From a perspective of the first device, the first device may first receive the first data packet, then receive the first indication information, and then receive the second data packet; or the first device may first receive the first data packet, then receive the second data packet, and then receive the first indication information; or the first device first receives the second data packet, then receives the first data packet, and then receives the first indication information.

In this embodiment of this application, when the first device first receives the second data packet and then receives the first data packet, the first device first buffers the second data packet.

Step 404: The first device processes the first data packet.

Herein, the first data packet is a data packet that is from the second device and that is received by the first device by using the first access device. If the first device receives the first data packet, the first data packet is directly processed. In the processing of the first data packet herein, if the first device is a terminal device, the first data packet may be sent from a protocol layer to another protocol layer. If the first device is a user plane device, the first data packet may be sent to a next-hop network node.

Step 405: The first device processes the second data packet.

Herein, the second data packet is a data packet that is from the second device and that is received by the second device by using the second access device. For example, if the first device first receives the second data packet, and then receives the first data packet and the first indication information, the first device first buffers the second data packet, and then processes the second data packet after the first device completes processing the first data packet. For example, if the first device first receives the first data packet and the first indication information, and then receives the second data packet, the first device first processes the first data packet, then determines, based on the first indication information, that the data packet is already sent by using the first access device, and then may continue to process the second data packet. For another example, if the first device first receives the first data packet, then receives the second data packet, and then receives the first indication information, the first device first processes the first data packet after receiving the first data packet, and because the first indication information is not received when the second data packet is received, it cannot be determined whether the data packet is already sent by using the first access device. Therefore, the second data packet is buffered first. After the first indication information is received, it is determined, based on the first indication information, that the data packet is already sent by using the first access device, and then the second data packet can be processed. For another example, if the first device first receives the second data packet, then receives the first data packet, and then receives the first indication information, because the first device does not receive the first indication information when receiving the second data packet, it cannot be determined whether the data packet is already sent by the second device by using the first access device. Therefore, the second data packet needs to be buffered first, and the first data packet can be processed when the first data packet is received. Then, after receiving the first indication information, the first device determines, based on the first indication information, that the data packet is already sent by using the first access device, and then the second data packet can be processed.

According to the foregoing solution, the second device starts to use the first access device to send a data packet of a data flow of a session to the first device, and then needs to switch to using the second access device to continue to send the data packet of the data flow of the session to the first device. After access technology switching, the second device sends, to the first device, the data packet including the first indication information. The first indication information is used to indicate that the first data packet of the data flow is already sent to the first device by using the first access device. The first data packet is last one or more data packets sent by the second device to the first device by using the first access device. Therefore, when receiving the first data packet by using the first access device, the first device directly processes the first data packet, and when receiving the second data packet by using the second access device, the first device does not process the second data packet until receiving the data packet that is sent by the second device by using the first access device and that includes the first indication information, and then, the first device processes the second data packet received by using the second access device, so that the terminal device can correctly process the data packets based on a sequence of sending the data packets by the second device, and this helps avoid an error or poor user experience caused by out-of-order delivery of the data packets.

Therefore, this application discloses a communication method, including the following steps.

A first device receives, by using a second access device, a second data packet that is of a data flow of a first session and that is from a second device. (Refer to the description in step 403).

The first device receives second indication information, and detects, based on the second indication information, whether a data packet received from a first access device includes first indication information. The second indication information is used to indicate that a transmission manner of the data flow is switched from using a first access technology to using a second access technology, and the first indication information is used to indicate that a first data packet of the data flow is already sent to the first device by using the first access device. (Refer to the descriptions in step 401 and step 402).

After the first device receives, by using the first access device, the first indication information that is from the second device, the first device processes the second data packet. The first device processes the first data packet before processing the second data packet. The first access device supports the first access technology, and the second access device supports the second access technology. (Refer to the descriptions in step 404 and step 405).

In a possible implementation, that the first device receives second indication information includes: The first device receives the second indication information from a session management network element. In most cases, the first device first receives the second indication information from the session management network element, and then receives, from the second access device, the second data packet that is from the second device. In an extreme case, the first device may first receive one or more second data packets that are from the second device, then receive the second indication information from the session management network element, and then receive another second data packet that is from the second device. In this case, the first device considers that an exception occurs, the second data packet received earlier than the second indication information may be discarded, or the second data packet received earlier than the second indication information is buffered and the second data packet is not processed temporarily. Therefore, the first device may first process the first data packet that is from the second device and that is received from the first access device, and then process the second data packet that is from the second device and that is received from the second access device. In a possible implementation, the first device is a terminal device, and the second device is a user plane network element; or the first device is a user plane network element, and the second device is a terminal device. According to the communication method, the second device starts to use the first access device to send a data packet of a data flow of a session to the first device, and then needs to switch to using the second access device to continue to send the data packet of the data flow of the session to the first device. After the switching, the second device sends, to the first device, a data packet including the first indication information. The first indication information is used to indicate that the first data packet of the data flow is already sent to the first device by using the first access device. The first data packet is last one or more data packets sent by the second device to the first device by using the first access device. Therefore, when receiving the first data packet by using the first access device, the first device directly processes the first data packet, and when receiving the second data packet by using the second access device, the first device does not process the second data packet until receiving the data packet that is sent by the second device by using the first access device and that includes the first indication information, and then, the first device processes the second data packet received by using the second access device, so that the terminal device can correctly process the data packets based on a sequence of sending the data packets by the second device, and this helps avoid an error or poor user experience caused by out-of-order delivery of the data packets.

Therefore, this application further discloses a communication method, including the following steps.

A second device receives third indication information, and sends, based on the third indication information, first indication information to a first device by using a first access device. The first indication information is used to indicate that a first data packet is already sent to the first device by using the first access device. (Refer to the descriptions in step 401a, step 401b, and step 401).

The second device sends a second data packet of a data flow to the first device by using a second access device. The first access device supports a first access technology, and the second access device supports a second access technology. (Refer to the description in step 403).

In a possible implementation, that a second device receives third indication information includes: The second device receives the third indication information from a session management network element.

In a possible implementation, the first device is a terminal device, and the second device is a user plane network element. Alternatively, the first device is a user plane network element, and the second device is a terminal device.

According to the communication method, the second device starts to use the first access device to send a data packet of a data flow of a session to the first device. After receiving the third indication information, the second device is triggered to switch to using the second access device to continue to send the data packet of the data flow of the session to the first device. Before the switching, the second device sends the first indication information to the first device. The first indication information is used to indicate that the first data packet of the data flow is already sent to the first device by using the first access device. The first data packet is last one or more data packets sent by the second device to the first device by using the first access device. Therefore, when receiving the first data packet by using the first access device, the first device directly processes the first data packet, and when receiving the second data packet by using the second access device, the first device does not process the second data packet until receiving a data packet that is sent by the second device by using the first access device and that includes the first indication information, and then, the first device processes the second data packet received by using the second access device, so that the terminal device can correctly process the data packets based on a sequence of sending the data packets by the second device, and this helps avoid an error or poor user experience caused by out-of-order delivery of the data packets.

The foregoing mainly describes the solutions provided in this application from a perspective of interaction between network elements. It may be understood that to implement the foregoing functions, each network element includes a corresponding hardware structure and/or software module for implementing each function. Persons of ordinary skill in the art should easily be aware that, in combination with the examples described in the embodiments disclosed in this specification, units and algorithms steps may be implemented by hardware or a combination of hardware and computer software in the present invention. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of the present invention.

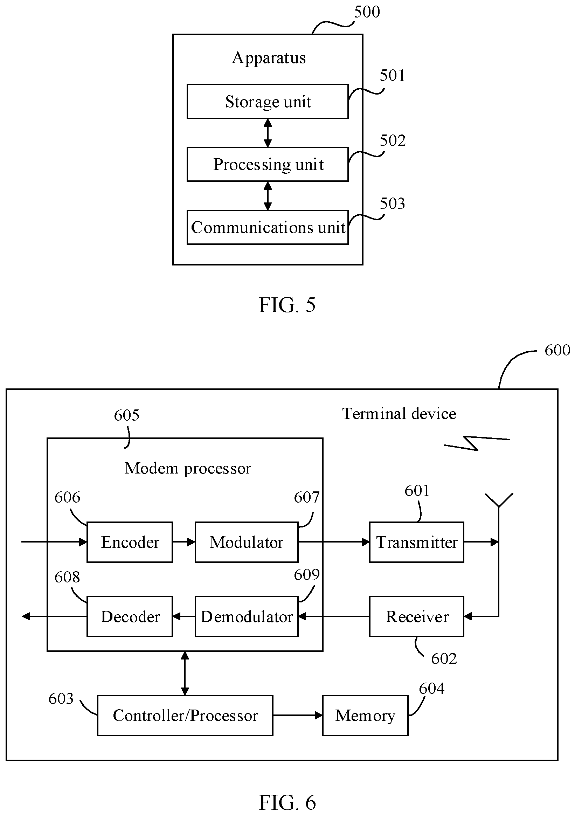

When an integrated unit is used, FIG. 5 is a block diagram of a possible example of an apparatus according to an embodiment of the present invention. The apparatus 500 may exist in a form of software. The apparatus 500 may include a processing unit 502 and a communications unit 503. In an implementation, the communications unit 503 may include a receiving unit and a sending unit. The processing unit 502 is configured to control and manage an action of the apparatus 500. The communications unit 503 is configured to support communication between the apparatus 500 and another network entity. The apparatus 500 may further include a storage unit 501, configured to store program code and data of the apparatus 500.

The processing unit 502 may be a processor or a controller, for example, may be a general purpose central processing unit (central processing unit, CPU), a general-purpose processor, a digital signal processor (digital signal processing, DSP), an application-specific integrated circuit (application specific integrated circuits, ASIC), a field programmable gate array (field programmable gate array, FPGA), or another programmable logic device, a transistor logic device, a hardware component, or any combination thereof. The processing unit 502 may implement or execute various example logical blocks, modules, and circuits described with reference to content disclosed in the present invention. Alternatively, the processor may be a combination of processors implementing a computing function, for example, a combination of one or more microprocessors, or a combination of the DSP and a microprocessor. The communications unit 503 may be a communications interface, a transceiver, a transceiver circuit, or the like, where the communications interface is a general name, and may include a plurality of interfaces during specific implementation. The storage unit 501 may be a memory.

In an embodiment, the apparatus 500 may be the first access device in any one of the foregoing embodiments, or may be a chip in the first access device. For example, the communications unit 503 is configured to support the apparatus 500 in performing step 201 to step 204 in FIG. 2, step 301b and step 305 to step 307 in FIG. 3, step 401c and step 401 in FIG. 4, and/or another process used for the technology described in this specification.

Specifically, when the communications unit 503 includes the sending unit and the receiving unit, in an embodiment, the receiving unit may be configured to receive first indication information from a UPF, where the first indication information is used to indicate a first access device to notify the UPF after the first access device sends a first downlink data packet of a data flow of a first session to a terminal device, and the first access device supports a first access technology. The sending unit may be configured to: after the first downlink data packet is already sent to the terminal device, send response information to the UPF, where the response information is used to indicate that the first downlink data packet is already sent to the terminal device.

In an implementation, the receiving unit may be specifically configured to receive a third downlink data packet from the UPF, where the third downlink data packet includes the first indication information.

In an implementation, the processing unit 502 may be configured to determine that the UPF sends the data flow of the first session to the terminal device by using a second access device. The second access device supports a second access technology.

In an implementation, the sending unit may be specifically configured to: send the response information to the UPF by using a session management network element; or send a first uplink data packet to the UPF, where the first uplink data packet includes the response information.

In an implementation, the first indication information is carried in the third downlink data packet sent by the UPF to the first access device.

In an implementation, the receiving unit may be further configured to receive second indication information, where the second indication information is used to indicate that the UPF sends the data flow of the first session to the terminal device by using the second access device, and the second access device supports the second access technology. The processing unit 502 may be configured to: after the receiving unit receives the second indication information, detect whether the data packet received from the UPF is the third downlink data packet.

In an implementation, the second indication information may include an identifier of the first session and an identifier of the data flow. Optionally, the second indication information may further include type information of the second access technology.

In an implementation, the receiving unit may be specifically configured to receive the second indication information from the session management network element.

In an implementation, the first access device may be a RAN device, the third downlink data packet includes a GTP-U header, and the GTP-U header may include the first indication information; or the first access device may be an N3IWF device, the third downlink data packet includes a GRE header, and the GRE header may include the first indication information.

In another embodiment, the receiving unit may be configured to receive the second indication information, where the second indication information is used to indicate the first access device to generate the first indication information, the first indication information is used to indicate that the first uplink data packet of the data flow of the first session is already sent by the terminal device to the UPF by using the first access device, and the first access device supports the first access technology. The sending unit may be configured to: first send the first uplink data packet to the UPF, and then send the first indication information to the UPF.

In an implementation, the second indication information includes the identifier of the first session and the identifier of the data flow.

In an implementation, the receiving unit may be specifically configured to: receive the second indication information sent by the session management network element; or receive the first uplink data packet from the terminal device, where the first uplink data packet includes the second indication information.

In an implementation, the sending unit may be specifically configured to send a third uplink data packet to the UPF, where the third uplink data packet includes the first indication information.

In a possible implementation, the communications unit 503 may include a first communications subunit, and the first communications subunit is configured to support communication between the apparatus 500 and the UPF. Further, the communications unit 503 may further include a second communications subunit, and the second communications subunit is configured to support communication between the apparatus 500 and the terminal device.

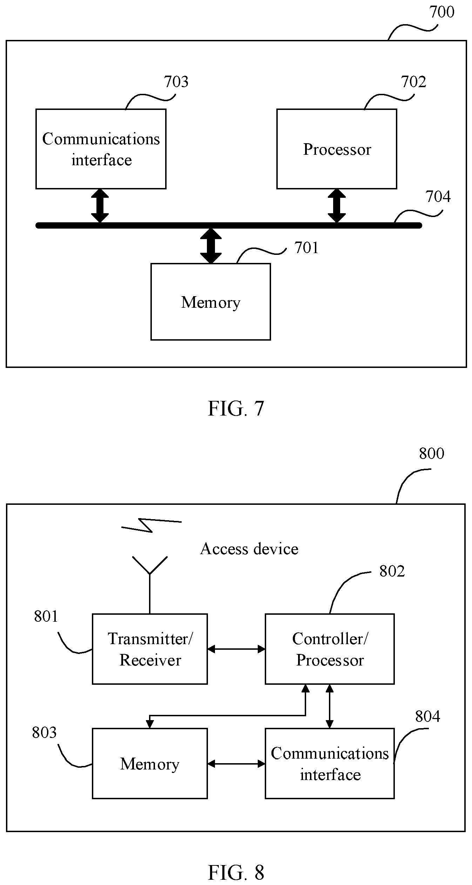

When the processing unit 502 is a processor, the first communications subunit may be a communications interface, the second communications subunit may be a transmitter/receiver; and when the storage unit 501 is a memory, the apparatus 500 in this embodiment of the present invention may be the access device shown in FIG. 8.

In another embodiment, the apparatus 500 shown in FIG. 5 may be the terminal device in this application.

For example, the processing unit 502 may support the apparatus 500 in performing the actions of the terminal device in the foregoing method examples. For example, the processing unit 502 is configured to support the apparatus 500 in performing step 301 in FIG. 3. The communications unit 503 may support the apparatus 500 in communicating with the access device and the UPF. For example, the communications unit 503 is configured to support the apparatus 500 in performing step 202 and step 206 in FIG. 2, and step 301b, step 302, and step 305 in FIG. 3.

When the first device in the embodiment shown in FIG. 4 is a terminal device, and the second device is a UPF, the processing unit 502 may be further configured to support the apparatus 500 in performing step 402, step 404, and step 405 in FIG. 4. The communications unit 503 may be further configured to support the apparatus 500 in performing step 401c, step 401, and step 403 in FIG. 4.

When the second device in the embodiment shown in FIG. 4 is a terminal device, and the first device is a UPF, the communications unit 503 may be further configured to support the apparatus 500 in performing step 401b, step 401, and step 403 in FIG. 4.

When the communications unit 503 includes the sending unit and the receiving unit, in an embodiment, when the first device in the foregoing embodiment is a terminal device, the receiving unit may be configured to: receive, by using a second access device, a second data packet that is of a data flow of a first session and that is from a second device; and receive second indication information, and detect, based on the second indication information, whether a data packet received from a first access device includes first indication information, where the second indication information is used to indicate that a transmission manner of the data flow is switched from using a first access technology to using a second access technology, and the first indication information is used to indicate that a first data packet of the data flow is already sent to the first device by using the first access device. The processing unit 502 may be configured to: after the receiving unit receives, by using the first access device, the first indication information that is from the second device, process the second data packet, where the first device processes the first data packet before processing the second data packet. The first access device supports the first access technology, and the second access device supports the second access technology.

In a possible implementation, the receiving unit may be specifically configured to receive the second indication information from a session management network element.

In another embodiment, when the second device in the foregoing embodiment is a terminal device, the sending unit may be configured to: send a first data packet of a data flow of a first session to a first device by using a first access device; and send a second data packet of the data flow to the second device by using a second access device. The receiving unit may be configured to receive third indication information. The sending unit may be further configured to send, based on the third indication information, first indication information to the first device by using the first access device, where the first indication information is used to indicate that the first data packet is already sent to the first device by using the first access device. The first access device supports a first access technology, and the second access device supports a second access technology.

In a possible implementation, the receiving unit may be specifically configured to receive the third indication information from a session management network element.

In another embodiment, the apparatus 500 shown in FIG. 5 may be the UPF in this application.

For example, the processing unit 502 may support the apparatus 500 in performing the actions of the UPF in the foregoing method examples. For example, the processing unit 502 is configured to support the apparatus 500 in performing step 304 in FIG. 3. The communications unit 503 may support the apparatus 500 in communicating with the access device and the terminal device. For example, the communications unit 503 is configured to support the apparatus 500 in performing step 201, step 203b, and step 203 to step 205 in FIG. 2, and step 303, step 306, and step 307 in FIG. 3.

When the first device in the embodiment shown in FIG. 4 is a UPF, and the second device is a terminal device, the processing unit 502 may be further configured to support the apparatus 500 in performing step 402, step 404, and step 405 in FIG. 4. The communications unit 503 may be further configured to support the apparatus 500 in performing step 401c, step 401, and step 403 in FIG. 4.

When the second device in the embodiment shown in FIG. 4 is a UPF, and the first device is a terminal device, the communications unit 503 may be further configured to support the apparatus 500 in performing step 401b, step 401, and step 403 in FIG. 4.

When the communications unit 503 includes the sending unit and the receiving unit, in an embodiment, the sending unit may be configured to send indication information to a first access device, where the indication information is used to indicate the first access device to notify a UPF after the first access device sends a first downlink data packet of a data flow of a first session to a terminal device. The receiving unit may be configured to receive response information, where the response information is used to indicate that the first downlink data packet is already sent to the terminal device. The sending unit may be further configured to: after the receiving unit receives the response information, send a second downlink data packet of the data flow to the terminal device by using a second access device.

In a possible implementation, the receiving unit may be specifically configured to: receive the response information from a session management network element; or receive an uplink data packet from the first access device, where the uplink data packet includes the response information.

In a possible implementation, the sending unit may be specifically configured to send a third downlink data packet to the first access device, where the third downlink data packet includes the indication information. The first access device may be a RAN device, the third downlink data packet includes a GTP-U header, and the GTP-U header may include the indication information; or the first access device may be an N3IWF device, the third downlink data packet includes a GRE header, and the GRE header may include the indication information.

In another embodiment, when the first device in the foregoing embodiment is a UPF, the receiving unit may be configured to: receive, by using a second access device, a second data packet that is of a data flow of a first session and that is from a second device; and receive second indication information, and detect, based on the second indication information, whether a data packet received from a first access device includes first indication information, where the second indication information is used to indicate that a transmission manner of the data flow is switched from using a first access technology to using a second access technology, and the first indication information is used to indicate that a first data packet of the data flow is already sent to the first device by using the first access device. The processing unit 502 may be configured to: after the receiving unit receives, by using the first access device, the first indication information that is from the second device, process the second data packet, where the first device processes the first data packet before processing the second data packet. The first access device supports the first access technology, and the second access device supports the second access technology.

In a possible implementation, the receiving unit may be specifically configured to receive the second indication information from a session management network element.

In another embodiment, when the second device in the foregoing embodiment is a UPF, the sending unit may be configured to: send a first data packet of a data flow of a first session to a first device by using a first access device; and send a second data packet of the data flow to the second device by using a second access device. The receiving unit may be configured to receive third indication information. The sending unit may be further configured to send, based on the third indication information, first indication information to the first device by using the first access device, where the first indication information is used to indicate that the first data packet is already sent to the first device by using the first access device. The first access device supports a first access technology, and the second access device supports a second access technology.

In a possible implementation, the receiving unit may be specifically configured to receive the third indication information from a session management network element.

FIG. 6 is a simplified schematic diagram of a possible designed structure of a terminal device according to an embodiment of the present invention. The terminal device 600 includes a transmitter 601, a receiver 602, and a processor 603. The processor 603 may also be a controller, and is represented as the "controller/processor 603" in FIG. 6. Optionally, the terminal 600 may further include a modem processor 605. The modem processor 605 may include an encoder 606, a modulator 607, a decoder 608, and a demodulator 609.

In an example, the transmitter 601 adjusts (for example, through analog conversion, filtering, amplification, and up-conversion) an output sample and generates an uplink signal. The uplink signal is transmitted to the first access device or the second access device in the foregoing embodiment through an antenna. On a downlink, the antenna receives a downlink signal transmitted by the first access device or the second access device in the foregoing embodiment. The receiver 602 adjusts (for example, through filtering, amplification, down-conversion, and digitization) a signal received from the antenna and provides an input sample. In the modem processor 605, the encoder 606 receives service data and a signaling message that are to be sent on an uplink, and processes (for example, formats, encodes, and interleaves) the service data and the signaling message. The modulator 607 further processes (such as through symbol mapping and modulation) encoded service data and an encoded signaling message, and provides an output sample. The demodulator 609 processes (for example, demodulates) the input sample and provides symbol estimation. The decoder 606 processes (for example, de-interleaves and decodes) the symbol estimation and provides the decoded data and signaling message that are to be sent to the terminal 600. The encoder 606, the modulator 607, the demodulator 609, and the decoder 608 may be implemented by the combined modem processor 605. The units perform processing based on a radio access technology used by a radio access network. It should be noted that when the terminal device 600 does not include the modem processor 605, the foregoing functions of the modem processor 605 may also be implemented by the processor 603.

The processor 603 controls and manages actions of the terminal device 600, and is configured to perform a processing process performed by the terminal device 600 in the foregoing embodiments of the present invention. For example, the processor 603 is configured to perform the processing processes of the terminal device in the method shown in FIG. 2 to FIG. 4 and/or another process of the technical solutions described in this application.

Further, the terminal device 600 may further include a memory 604, and the memory 604 is configured to store program code and data of the terminal device 600.

FIG. 7 is a schematic diagram of an apparatus according to this application. The apparatus may be the user plane network element in the foregoing embodiment. The apparatus 700 includes a processor 702, a communications interface 703, and a memory 701. Optionally, the apparatus 700 may further include a communication line 704. The communications interface 703, the processor 702, and the memory 701 may be connected to each other through a communication line 704. The communication line 704 may be a peripheral component interconnect (peripheral component interconnect, PCI for short) bus, an extended industry standard architecture (extended industry standard architecture, EISA for short) bus, or the like. The communication line 704 may be classified into an address bus, a data bus, a control bus, and the like. For ease of representation, only one thick line is used to represent the bus in FIG. 7, but this does not mean that there is only one bus or only one type of bus.

The processor 702 may be a CPU, a microprocessor, an ASIC, or one or more integrated circuits configured to control program execution in the solutions of this application.

The communications interface 703 may be any apparatus like a transceiver, and is configured to communicate with another device or a communications network, such as Ethernet, a RAN, a wireless local area network (wireless local area networks, WLAN), or a wired access network.

The memory 701 may be a read-only memory (read-only memory, ROM) or another type of static storage device that can store static information and an instruction, or a random access memory (random access memory, RAM) or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Bluray disc, or the like), a magnetic disk storage medium or another magnetic storage device, or any other medium that can be used to carry or store expected program code in a form of an instruction or a data structure and that can be accessed by a computer, but is not limited thereto. The memory may exist independently, and is connected to the processor through the communication line 704. The memory may alternatively be integrated with the processor.

The memory 701 is configured to store a computer-executable instruction for executing the solutions in this application, and the processor 702 controls the execution. The processor 702 is configured to execute the computer-executable instruction stored in the memory 701, to implement the communication method provided in the foregoing embodiments of this application.

Optionally, the computer-executable instruction in this embodiment of this application may also be referred to as application program code. This is not specifically limited in this embodiment of this application.

FIG. 8 is a possible schematic structural diagram of an access device according to an embodiment of the present invention. The access device 800 includes a processor 802 and a communications interface 804. The processor 802 may also be a controller, and is represented as the "controller/processor 802" in FIG. 8. The communications interface 804 is configured to support the access device in communicating with another network element (for example, a UPF). Further, the access device 800 may further include a transmitter/receiver 801. The transmitter/receiver 801 is configured to support radio communication between the access device and the terminal device in the foregoing embodiments. The processor 802 may perform various functions for communicating with the terminal device. In an uplink, an uplink signal that is from the terminal device is received through an antenna, is demodulated (for example, a high frequency signal is demodulated into a baseband signal) by the receiver 801, and is further processed by the processor 802 to recover service data and signaling information that are sent by the terminal device. In a downlink, service data and a signaling message are processed by the processor 802, and are modulated (for example, a baseband signal is modulated into a high frequency signal) by the transmitter 801 to generate a downlink signal, and the downlink signal is transmitted to the terminal device through an antenna. It should be noted that the foregoing demodulation or modulation function may also be implemented by the processor 802.

For example, the processor 802 is further configured to perform the processing processes of the first access device in the method shown in FIG. 2 to FIG. 4 and/or another process of the technical solutions described in this application.

Further, the access device 800 may further include a memory 803, and the memory 803 is configured to store program code and data of the access device 800.

It may be understood that, FIG. 8 shows only a simplified design of the access device 800. In actual application, the access device 800 may include any quantity of transmitters, receivers, processors, controllers, memories, communications units, and the like, and all access devices that can implement the embodiments of the present invention fall within the protection scope of the embodiments of the present invention.

All or some of the foregoing embodiments may be implemented through software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The various illustrative logical units and circuits described in the embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in the embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor, so that the processor may read information from the storage medium and write information to the storage medium. Optionally, the storage medium may be further integrated into a processor. The processor and the storage medium may be disposed in an ASIC, and the ASIC may be disposed in a terminal device. Optionally, the processor and the storage medium may be alternatively disposed in different components of the terminal device.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

## Claims

1. A communication method, comprising:
sending, by a user plane network element, indication information to a first access device, wherein the indication information is used to indicate the first access device to notify the user plane network element after the first access device sends a first downlink data packet of a data flow of a first session to a terminal device; and
after the user plane network element receives response information, sending, by the user plane network element, a second downlink data packet of the data flow to the terminal device by using a second access device, wherein the response information is used to indicate that the first downlink data packet is already sent to the terminal device,
the first access device supports a first access technology, and the second access device supports a second access technology.

2. The method according to claim 1, wherein the receiving, by the user plane network element, response information comprises:
receiving, by the user plane network element, the response information from a session management network element; or
receiving, by the user plane network element, an uplink data packet from the first access device, wherein the uplink data packet comprises the response information.

3. A communication method, comprising:
receiving, by a first access device, first indication information from a user plane network element, wherein the first indication information is used to indicate the first access device to notify the user plane network element after the first access device sends a first downlink data packet of a data flow of a first session to a terminal device, and the first access device supports a first access technology; and
after the first downlink data packet is already sent to the terminal device, sending, by the first access device, response information to the user plane network element, wherein the response information is used to indicate that the first downlink data packet is already sent to the terminal device.

4. The method according to claim 3, wherein the method further comprises:
determining, by the first access device, that the user plane network element sends the data flow of the first session to the terminal device by using a second access device, wherein the second access device supports a second access technology.

5. The method according to claim 3 or 4, wherein the sending, by the first access device, response information to the user plane network element comprises:
sending, by the first access device, the response information to the user plane network element by using a session management network element; or
sending, by the first access device, a first uplink data packet to the user plane network element, wherein the first uplink data packet comprises the response information.

6. The method according to any one of claims 3 to 5, wherein the first indication information is carried in a third downlink data packet sent by the user plane network element to the first access device.

7. The method according to claim 6, wherein the method further comprises:
receiving, by the first access device, second indication information; and after receiving the second indication information, detecting, by the first access device, whether a data packet received from the user plane network element is the third downlink data packet.

8. The method according to claim 7, wherein the second indication information comprises an identifier of the first session and an identifier of the data flow.

9. The method according to claim 7 or 8, wherein the receiving, by the first access device, second indication information comprises:
receiving, by the first access device, the second indication information from the session management network element.

10. A communication method, comprising:
receiving, by a first device by using a second access device, a second data packet that is of a data flow of a first session and that is from a second device;
receiving, by the first device, second indication information, and detecting, based on the second indication information, whether a data packet received from a first access device comprises first indication information, wherein the second indication information is used to indicate that a transmission manner of the data flow is switched from using a first access technology to using a second access technology, and the first indication information is used to indicate that a first data packet of the data flow is already sent to the first device by using the first access device; and
after the first device receives, by using the first access device, the first indication information that is from the second device, processing, by the first device, the second data packet, wherein the first device processes the first data packet before processing the second data packet,
the first access device supports the first access technology, and the second access device supports the second access technology.

11. An apparatus, applied to a user plane network element, and comprising a sending unit and a receiving unit, wherein
the sending unit is configured to send indication information to a first access device, wherein the indication information is used to indicate the first access device to notify the user plane network element after the first access device sends a first downlink data packet of a data flow of a first session to a terminal device;
the receiving unit is configured to receive response information, wherein the response information is used to indicate that the first downlink data packet is already sent to the terminal device; and
the sending unit is further configured to: after the receiving unit receives the response information, send a second downlink data packet of the data flow to the terminal device by using a second access device.

12. A user plane network element, comprising the apparatus according to claim 11.

13. An apparatus, applied to a first access device, and comprising a sending unit and a receiving unit, wherein
the receiving unit is configured to receive first indication information from a user plane network element, wherein the first indication information is used to indicate the first access device to notify the user plane network element after the first access device sends a first downlink data packet of a data flow of a first session to a terminal device; and
the sending unit is configured to: after the first downlink data packet is already sent to the terminal device, send response information to the user plane network element, wherein the response information is used to indicate that the first downlink data packet is already sent to the terminal device.

14. An access device, comprising the apparatus according to claim 13.

15. An apparatus, applied to a first device, and comprising a receiving unit and a processing unit, wherein
the receiving unit is configured to: receive, by using a second access device, a second data packet that is of a data flow of a first session and that is from a second device; and receive second indication information, and detect, based on the second indication information, whether a data packet received from a first access device comprises first indication information, wherein the second indication information is used to indicate that a transmission manner of the data flow is switched from using a first access technology to using a second access technology, and the first indication information is used to indicate that a first data packet of the data flow is already sent to the first device by using the first access device; and
the processing unit is configured to: after the receiving unit receives, by using the first access device, the first indication information that is from the second device, process the second data packet, wherein the first device processes the first data packet before processing the second data packet,
the first access device supports the first access technology, and the second access device supports the second access technology.

## Patentansprüche

1. Kommunikationsverfahren, umfassend:
Senden von Anzeigeinformationen durch ein Benutzerebenen-Netzwerkelement an ein erstes Zugangsgerät, wobei die Anzeigeinformationen verwendet werden, um dem ersten Zugangsgerät anzuzeigen, das Benutzerebenen-Netzwerkelement zu benachrichtigen, nachdem das erste Zugangsgerät ein erstes Downlink-Datenpaket eines Datenflusses einer ersten Sitzung an ein Endgerät sendet; und
nachdem das Benutzerebenen-Netzwerkelement Antwortinformationen empfängt, Senden eines zweiten Downlink-Datenpakets des Datenflusses durch das Benutzerebenen-Netzwerkelement an das Endgerät unter Verwendung eines zweiten Zugangsgeräts, wobei die Antwortinformationen verwendet werden, um anzuzeigen, dass das erste Downlink-Datenpaket bereits an das Endgerät gesendet wurde,
wobei das erste Zugangsgerät eine erste Zugangstechnologie unterstützt und das zweite Zugangsgerät eine zweite Zugangstechnologie unterstützt.

2. Verfahren nach Anspruch 1, wobei das Empfangen von Antwortinformationen durch das Benutzerebenen-Netzwerkelement Folgendes umfasst:
Empfangen der Antwortinformationen von einem Sitzungsverwaltungs-Netzwerkelement durch das Benutzerebenen-Netzwerkelement; oder
Empfangen eines Uplink-Datenpakets von dem ersten Zugangsgerät durch das Benutzerebenen-Netzwerkelement, wobei das Uplink-Datenpaket die Antwortinformationen umfasst.

3. Kommunikationsverfahren, umfassend:
Empfangen von ersten Anzeigeinformationen von einem Benutzerebenen-Netzwerkelement durch ein erstes Zugangsgerät, wobei die ersten Anzeigeinformationen verwendet werden, um dem ersten Zugangsgerät anzuzeigen, das Benutzerebenen-Netzwerkelement zu benachrichtigen, nachdem das erste Zugangsgerät ein erstes Downlink-Datenpaket eines Datenflusses einer ersten Sitzung an ein Endgerät sendet, und das erste Zugangsgerät eine erste Zugangstechnologie unterstützt; und
nachdem das erste Downlink-Datenpaket bereits an das Endgerät gesendet wurde, Senden von Antwortinformationen durch das erste Zugangsgerät an das Benutzerebenen-Netzwerkelement, wobei die Antwortinformationen verwendet werden, um anzuzeigen, dass das erste Downlink-Datenpaket bereits an das Endgerät gesendet wurde.

4. Verfahren nach Anspruch 3, wobei das Verfahren ferner Folgendes umfasst:
Bestimmen durch das erste Zugangsgerät, dass das Benutzerebenen-Netzwerkelement den Datenfluss der ersten Sitzung an das Endgerät unter Verwendung eines zweiten Zugangsgeräts sendet, wobei das zweite Zugangsgerät eine zweite Zugangstechnologie unterstützt.

5. Verfahren nach Anspruch 3 oder 4, wobei das Senden von Antwortinformationen durch das erste Zugangsgerät an das Benutzerebenen-Netzwerkelement Folgendes umfasst:
Senden der Antwortinformationen durch das erste Zugangsgerät an das Benutzerebenen-Netzwerkelement unter Verwendung eines Sitzungsverwaltungs-Netzwerkelements; oder
Senden eines ersten Uplink-Datenpakets durch das erste Zugangsgerät an das Benutzerebenen-Netzwerkelement, wobei das erste Uplink-Datenpaket die Antwortinformationen umfasst.

6. Verfahren nach einem der Ansprüche 3 bis 5, wobei die ersten Anzeigeinformationen in einem dritten Downlink-Datenpaket getragen werden, das durch das Benutzerebenen-Netzwerkelement an das erste Zugangsgerät gesendet wird.

7. Verfahren nach Anspruch 6, wobei das Verfahren ferner Folgendes umfasst:
Empfangen von zweiten Anzeigeinformationen durch das erste Zugangsgerät; und nach dem Empfangen der zweiten Anzeigeinformationen, Erfassen durch das erste Zugangsgerät, ob ein von dem Benutzerebenen-Netzwerkelement empfangenes Datenpaket das dritte Downlink-Datenpaket ist.

8. Verfahren nach Anspruch 7, wobei die zweiten Anzeigeinformationen eine Kennung der ersten Sitzung und eine Kennung des Datenflusses umfassen.

9. Verfahren nach Anspruch 7 oder 8, wobei das Empfangen von zweiten Anzeigeinformationen durch das erste Zugangsgerät Folgendes umfasst:
Empfangen der zweiten Anzeigeinformationen von dem Sitzungsverwaltungs-Netzwerkelement durch das erste Zugangsgerät.

10. Kommunikationsverfahren, umfassend:
Empfangen eines zweiten Datenpakets, das von einem Datenfluss einer ersten Sitzung stammt und von einem zweiten Gerät stammt, durch ein erstes Gerät unter Verwendung eines zweiten Zugangsgeräts;
Empfangen von zweiten Anzeigeinformationen durch das erste Gerät und Erfassen, basierend auf den zweiten Anzeigeinformationen, ob ein von einem ersten Zugangsgerät empfangenes Datenpaket erste Anzeigeinformationen umfasst, wobei die zweiten Anzeigeinformationen verwendet werden, um anzuzeigen, dass eine Übertragungsart des Datenflusses von der Verwendung einer ersten Zugangstechnologie auf die Verwendung einer zweiten Zugangstechnologie umgeschaltet wird, und die ersten Anzeigeinformationen verwendet werden, um anzuzeigen, dass ein erstes Datenpaket des Datenflusses bereits an das erste Gerät unter Verwendung des ersten Zugangsgerät gesendet wurde; und
nachdem das erste Gerät unter Verwendung des ersten Zugangsgerät die ersten Anzeigeinformationen empfängt, die von dem zweiten Gerät stammen, Verarbeiten des zweiten Datenpakets durch das erste Gerät, wobei das erste Gerät das erste Datenpaket verarbeitet, bevor es das zweite Datenpaket verarbeitet,
wobei das erste Zugangsgerät die erste Zugangstechnologie unterstützt und das zweite Zugangsgerät die zweite Zugangstechnologie unterstützt.

11. Vorrichtung, die auf ein Benutzerebenen-Netzwerkelement angewendet wird und eine Sendeeinheit und eine Empfangseinheit umfasst, wobei
die Sendeeinheit konfiguriert ist, um Anzeigeinformationen an ein erstes Zugangsgerät zu senden, wobei die Anzeigeinformationen verwendet werden, um dem ersten Zugangsgerät anzuzeigen, das Benutzerebenen-Netzwerkelement zu benachrichtigen, nachdem das erste Zugangsgerät ein erstes Downlink-Datenpaket eines Datenflusses einer ersten Sitzung an ein Endgerät sendet;
die Empfangseinheit konfiguriert ist, um Antwortinformationen zu empfangen, wobei die Antwortinformationen verwendet werden, um anzuzeigen, dass das erste Downlink-Datenpaket bereits an das Endgerät gesendet wurde; und
die Sendeeinheit ferner konfiguriert ist zum: nachdem die Empfangseinheit die Antwortinformationen empfängt, Senden eines zweiten Downlink-Datenpakets des Datenflusses an das Endgerät unter Verwendung eines zweiten Zugangsgeräts.

12. Benutzerebenen-Netzwerkelement, umfassend die Vorrichtung nach Anspruch 11.

13. Vorrichtung, die auf ein erstes Zugangsgerät angewendet wird und eine Sendeeinheit und eine Empfangseinheit umfasst, wobei die Empfangseinheit konfiguriert ist, um erste Anzeigeinformationen von einem Benutzerebenen-Netzwerkelement zu empfangen, wobei die ersten Anzeigeinformationen verwendet werden, um dem ersten Zugangsgerät anzuzeigen, das Benutzerebenen-Netzwerkelement zu benachrichtigen, nachdem das erste Zugangsgerät ein erstes Downlink-Datenpaket eines Datenflusses einer ersten Sitzung an ein Endgerät sendet; und die Sendeeinheit konfiguriert ist zum: nachdem das erste Downlink-Datenpaket bereits an das Endgerät gesendet wurde, Senden von Antwortinformationen an das Benutzerebenen-Netzwerkelement, wobei die Antwortinformationen verwendet werden, um anzuzeigen, dass das erste Downlink-Datenpaket bereits an das Endgerät gesendet wurde.

14. Zugangsgerät, umfassend die Vorrichtung nach Anspruch 13.

15. Vorrichtung, die auf ein erstes Gerät angewendet wird und eine Sendeeinheit und eine Verarbeitungseinheit umfasst, wobei die Empfangseinheit konfiguriert ist zum: Empfangen eines zweiten Datenpakets, das von einem Datenfluss einer ersten Sitzung stammt und von einem zweiten Gerät stammt, unter Verwendung eines zweiten Zugangsgeräts; und Empfangen von zweiten Anzeigeinformationen und Erfassen, basierend auf den zweiten Anzeigeinformationen, ob ein Datenpaket, das von einem ersten Zugangsgerät empfangen wird, erste Anzeigeinformationen umfasst, wobei die zweiten Anzeigeinformationen verwendet werden, um anzuzeigen, dass eine Übertragungsart des Datenflusses von der Verwendung einer ersten Zugangstechnologie auf die Verwendung einer zweiten Zugangstechnologie umgeschaltet wird, und die ersten Anzeigeinformationen verwendet werden, um anzuzeigen, dass ein erstes Datenpaket des Datenflusses bereits an das erste Gerät unter Verwendung des ersten Zugangsgeräts gesendet wurde; und
die Verarbeitungseinheit konfiguriert ist zum: nachdem die Empfangseinheit unter Verwendung des ersten Zugangsgeräts die ersten Anzeigeinformationen, die von dem zweiten Gerät stammen, empfängt, Verarbeiten des zweiten Datenpakets, wobei das erste Gerät das erste Datenpaket verarbeitet, bevor es das zweite Datenpaket verarbeitet,
wobei das erste Zugangsgerät die erste Zugangstechnologie unterstützt und das zweite Zugangsgerät die zweite Zugangstechnologie unterstützt.

## Revendications

1. Procédé de communication, comprenant :
l'envoi, par un élément de réseau de plan utilisateur, d'informations d'indication à un premier dispositif d'accès, dans lequel les informations d'indication sont utilisées pour indiquer au premier dispositif d'accès de notifier l'élément de réseau de plan utilisateur après que le premier dispositif d'accès a envoyé un premier paquet de données de liaison descendante d'un flux de données d'une première session vers un dispositif terminal ; et
après que l'élément de réseau de plan utilisateur a reçu des informations de réponse, l'envoi, par l'élément de réseau de plan utilisateur, d'un deuxième paquet de données de liaison descendante du flux de données au dispositif terminal à l'aide d'un second dispositif d'accès, dans lequel les informations de réponse sont utilisées pour indiquer que le premier paquet de données de liaison descendante est déjà envoyé au dispositif terminal,
le premier dispositif d'accès prend en charge une première technologie d'accès, et le second dispositif d'accès prend en charge une seconde technologie d'accès.

2. Procédé selon la revendication 1, dans lequel la réception, par l'élément de réseau de plan utilisateur, d'informations de réponse comprend :
la réception, par l'élément de réseau de plan utilisateur, des informations de réponse d'un élément de réseau de gestion de session ; ou
la réception, par l'élément de réseau de plan utilisateur, d'un paquet de données de liaison montante provenant du premier dispositif d'accès, dans lequel le paquet de données de liaison montante comprend les informations de réponse.

3. Procédé de communication, comprenant :
la réception, par un premier dispositif d'accès, de premières informations d'indication d'un élément de réseau de plan utilisateur, dans lequel les informations d'indication sont utilisées pour indiquer au premier dispositif d'accès de notifier l'élément de réseau de plan utilisateur après que le premier dispositif d'accès a envoyé un premier paquet de données de liaison descendante d'un flux de données d'une première session vers un dispositif terminal, et le premier dispositif d'accès prend en charge une première technologie d'accès ; et
après que le premier paquet de données de liaison descendante a déjà été envoyé au dispositif terminal, l'envoi, par le premier dispositif d'accès, d'informations de réponse à l'élément de réseau de plan utilisateur, dans lequel les informations de réponse sont utilisées pour indiquer que le premier paquet de données de liaison descendante est déjà envoyé au dispositif terminal.

4. Procédé selon la revendication 3, dans lequel le procédé comprend en outre :
la détermination, par le premier dispositif d'accès, que l'élément de réseau de plan utilisateur envoie le flux de données de la première session au dispositif terminal à l'aide d'un second dispositif d'accès, dans lequel le second dispositif d'accès prend en charge une seconde technologie d'accès.

5. Procédé selon la revendication 3 ou 4, dans lequel l'envoi, par le premier dispositif d'accès, d'informations de réponse à l'élément de réseau de plan utilisateur comprend :
l'envoi, par le premier dispositif d'accès, des informations de réponse à l'élément de réseau de plan utilisateur à l'aide d'un élément de réseau de gestion de session ; ou
l'envoi, par le premier dispositif d'accès, d'un premier paquet de données de liaison montante à l'élément de réseau de plan utilisateur, dans lequel le premier paquet de données de liaison montante comprend les informations de réponse.

6. Procédé selon l'une quelconque des revendications 3 à 5, dans lequel les premières informations d'indication sont transportées dans un troisième paquet de données de liaison descendante envoyé par l'élément de réseau de plan utilisateur au premier dispositif d'accès.

7. Procédé selon la revendication 6, dans lequel le procédé comprend en outre :
la réception, par le premier dispositif d'accès, de secondes informations d'indication ; et après réception des secondes informations d'indication, le fait de détecter, par le premier dispositif d'accès, si un paquet de données reçu de l'élément de réseau de plan utilisateur est le troisième paquet de données de liaison descendante.

8. Procédé selon la revendication 7, dans lequel les secondes informations d'indication comprennent un identifiant de la première session et un identifiant du flux de données.

9. Procédé selon la revendication 7 ou 8, dans lequel la réception, par le premier dispositif d'accès, de secondes informations d'indication comprend :
la réception, par le premier dispositif d'accès, des secondes informations d'indication de l'élément de réseau de gestion de session.

10. Procédé de communication, comprenant :
la réception, par un premier dispositif à l'aide d'un second dispositif d'accès, d'un deuxième paquet de données qui est d'un flux de données d'une première session et qui provient d'un second dispositif ;
la réception, par le premier dispositif, de secondes informations d'indication, et le fait de détecter, sur la base des secondes informations d'indication, si un paquet de données reçu d'un premier dispositif d'accès comprend des premières informations d'indication, dans lequel les secondes informations d'indication sont utilisées pour indiquer qu'un mode de transmission du flux de données est commuté de l'utilisation d'une première technologie d'accès à l'utilisation d'une seconde technologie d'accès, et les premières informations d'indication sont utilisées pour indiquer qu'un premier paquet de données du flux de données est déjà envoyé au premier dispositif à l'aide du premier dispositif d'accès ; et
après que le premier dispositif a reçu, à l'aide du premier dispositif d'accès, les premières informations d'indication provenant du second dispositif, le traitement, par le premier dispositif, du deuxième paquet de données, dans lequel le premier dispositif traite le premier paquet de données avant de traiter le deuxième paquet de données,
le premier dispositif d'accès prend en charge la première technologie d'accès, et le second dispositif d'accès prend en charge la seconde technologie d'accès.

11. Appareil, appliqué à un élément de réseau de plan utilisateur, et comprenant une unité d'envoi et une unité de réception, dans lequel
l'unité d'envoi est configurée pour envoyer des informations d'indication à un premier dispositif d'accès, dans lequel les informations d'indication sont utilisées pour indiquer au premier dispositif d'accès de notifier l'élément de réseau de plan utilisateur après que le premier dispositif d'accès a envoyé un premier paquet de données de liaison descendante d'un flux de données d'une première session vers un dispositif terminal ;
l'unité de réception est configurée pour recevoir des informations de réponse, dans lequel les informations de réponse sont utilisées pour indiquer que le premier paquet de données de liaison descendante est déjà envoyé au dispositif terminal ; et
l'unité d'envoi est en outre configurée pour : après que l'unité de réception a reçu les informations de réponse, envoyer un deuxième paquet de données de liaison descendante du flux de données au dispositif terminal à l'aide d'un second dispositif d'accès.

12. Élément de réseau de plan utilisateur, comprenant l'appareil selon la revendication 11.

13. Appareil, appliqué à un premier dispositif d'accès, et comprenant une unité d'envoi et une unité de réception, dans lequel
l'unité de réception est configurée pour recevoir des premières informations d'indication d'un élément de réseau de plan utilisateur, dans lequel les premières informations d'indication sont utilisées pour indiquer au premier dispositif d'accès de notifier l'élément de réseau de plan utilisateur après que le premier dispositif d'accès a envoyé un premier paquet de données de liaison descendante d'un flux de données d'une première session vers un dispositif terminal ; et
l'unité d'envoi est configurée pour : après que le premier paquet de données de liaison descendante a déjà été envoyé au dispositif terminal, envoyer des informations de réponse à l'élément de réseau de plan utilisateur, dans lequel les informations de réponse sont utilisées pour indiquer que le premier paquet de données de liaison descendante est déjà envoyé au dispositif terminal.

14. Dispositif d'accès, comprenant l'appareil selon la revendication 13.

15. Appareil, appliqué à un premier dispositif, et comprenant une unité de réception et une unité de traitement, dans lequel l'unité de réception est configurée pour : recevoir, à l'aide d'un second dispositif d'accès, un deuxième paquet de données qui est d'un flux de données d'une première session et qui provient d'un second dispositif ; et recevoir des secondes informations d'indication, et détecter, sur la base des secondes informations d'indication, si un paquet de données reçu d'un premier dispositif d'accès comprend des premières informations d'indication, dans lequel les secondes informations d'indication sont utilisées pour indiquer qu'un mode de transmission du flux de données est commuté de l'utilisation d'une première technologie d'accès à l'utilisation d'une seconde technologie d'accès, et les premières informations d'indication sont utilisées pour indiquer qu'un premier paquet de données du flux de données est déjà envoyé au premier dispositif à l'aide du premier dispositif d'accès ; et
l'unité de traitement est configurée pour : après que l'unité de réception a reçu, à l'aide du premier dispositif d'accès, les premières informations d'indication provenant du second dispositif, traiter le deuxième paquet de données, dans lequel le premier dispositif traite le premier paquet de données avant de traiter le deuxième paquet de données,
le premier dispositif d'accès prend en charge la première technologie d'accès, et le second dispositif d'accès prend en charge la seconde technologie d'accès.
